# EUROPEAN PATENT SPECIFICATION

(11) **EP 4 182 393 B1**
(45) Date of publication and mention of the grant of the patent: **30.09.2026**
(21) Application number: 21743504.9
(22) Date of filing: 15.07.2021
(51) Int. Cl.: C09C 1/02, C08K 9/00, C08K 7/02, C08K 5/00, C08K 9/08, C08K 3/26

(54) **A COMPOSITION FORMED FROM A CALCIUM CARBONATE-COMPRISING MATERIAL AND A GRAFTED POLYMER**
AUS EINEM CALCIUMCARBONATUMFASSENDEN MATERIAL UND EINEM GEPFROPFTEN POLYMER GEFORMTE ZUSAMMENSETZUNG
COMPOSITION FORMÉE À PARTIR D'UN MATÉRIAU CONTENANT DU CARBONATE DE CALCIUM ET UN POLYMÈRE GREFFÉ

(30) Priority: 16.07.2020 EP 20186160
(43) Date of publication of application: 24.05.2023
(73) Proprietor: Omya International AG, 4665 Oftringen (CH)
(72) Inventor: WELKER, Matthias, 68220 Hésingue (FR); RENTSCH, Samuel, 3095 Spiegel bei Bern (CH)
(74) Representative: Maiwald GmbH
(86) International application number: PCT/EP2021/069765
(87) International publication number: WO 2022/013356

(56) References cited:
- EP-A1- 2 910 609
- EP-A1- 3 192 837
- PROF DR MARINO XANTHOS (ED) ET AL: "Functional Fillers for Plastics "Functional Polymers and Other Modifiers"", FUNCTIONAL FILLERS FOR PLASTICS, WILEY-VCH VERLAG, WEINHEIM, DE, 26 September 2005 (2005-09-26), pages 105 - 128, XP002468254

## Description

The present invention relates to a composition comprising a calcium carbonate-comprising material and from 0.1 to 8 wt.-%, based on the total weight of the calcium carbonate-comprising material, of at least one grafted polymer comprising at least one succinic anhydride group obtained by grafting maleic anhydride onto a homo- or copolymer comprising butadiene units and optionally styrene units and/or salty reaction products thereof, a polyester mixture comprising said composition, a polyester product prepared from the polyester mixture, a process for preparing the polyester product as well as the use of the at least one grafted polymer to decrease the melt flow rate of such a polyester product and an article formed from the polyester product.

It is common in the art to add certain fillers to polymer compositions such as polyesters. For example, fillers such as calcium carbonate-comprising materials are added to polyester products in order to improve its mechanical properties. For example, EP3192837 A1 refers to a surface-modified calcium carbonate, which is surface-treated with an anhydride or acid or salt thereof, and suggests its use inter alia in polymer compositions, papermaking, paints, adhesives, sealants, pharma applications, crosslinking of rubbers, polyolefins, polyvinyl chlorides, in unsaturated polyesters and in alkyd resins. EP2554358 A1 refers to a moisture-permeable and waterproof film that is biodegradable comprising polylactic acid and an inorganic filler. The inorganic filler is selected from the group consisting of calcium carbonate, barium carbonate, calcium sulfate, barium sulfate, magnesium hydroxide, aluminum hydroxide, calcium hydroxide, magnesium oxide, titanium oxide, zinc oxide, silicon oxide and talc. WO2009/152427 A1 refers to a biaxially oriented laminate film including a core layer including a blend of crystalline polylactic acid polymer and an inorganic antiblock particle. EP1254766 A1 refers to multilayer films comprising a layer comprising a thermoplastic polymer, such as an aliphatic-aromatic copolyester (AAPE), with or without filler, and a layer comprising a filled thermoplastic polymer.

However, such polyester products are sensitive to moisture and the addition of a calcium carbonate-comprising filler material tends to catalyse the hydrolysis of the polymer. The foregoing results in a very fluid polymer during production/extrusion due to the partial cleavage of the ester bonds and thus in a decrease of the molecular weight of the polyester. This is even more pronounced in case the calcium carbonate-comprising filler material is surface treated with stearic acid. This can lead to problems if the polymer becomes too liquid, and especially during recycling processes.

Thus, there is an ongoing need for calcium carbonate-comprising materials providing a polyester with good processability.

Accordingly, it is an object of the present invention to provide a calcium carbonate-comprising material imparting good processability to polyester. Furthermore, it is desirable that the polyester comprising the calcium carbonate-comprising material further provides excellent mechanical properties, and in particular, tensile properties.

The foregoing and other objects are solved by the subject-matter as defined in the independent claims. Advantageous embodiments of the present invention are defined in the corresponding subclaims.

According to one aspect of the present invention, a composition is provided comprising a calcium carbonate-comprising material selected from among ground calcium carbonate (GCC), precipitated calcium carbonate (PCC) and mixtures thereof, and from 0.1 to 8 wt.-%, based on the total weight of the calcium carbonate-comprising material, of at least one grafted polymer comprising at least one succinic anhydride group obtained by grafting maleic anhydride onto a homo- or copolymer comprising butadiene units and optionally styrene units and/or salty reaction products thereof.

According to one embodiment, the ground calcium carbonate (GCC) is selected from the group consisting of marble, limestone, dolomite, chalk and mixtures thereof, or the precipitated calcium carbonate (PCC) is selected from the group consisting of the aragonitic, vateritic and calcitic mineralogical crystal forms, colloidal PCC, and mixtures thereof, preferably the calcium carbonate-comprising material is ground calcium carbonate.

According to another embodiment, the calcium carbonate-comprising material has
i) a weight median particle size *d*₅₀ value measured by the sedimentation method in the range from 0.1 µm to 10 µm, preferably in the range from 0.15 µm to 5 µm, more preferably in the range from 0.2 µm to 3 µm and most preferably in the range from 0.25 µm to 3 µm, e.g. from 0.3 µm to 2 µm or from 0.3 µm to 1.5 µm, and/or
ii) a top cut (*d*₉₈) measured by the sedimentation method of ≤ 45 µm, preferably of ≤ 30 µm, more preferably of ≤ 20 µm and most preferably of ≤ 15 µm, and/or
iii) a specific surface area (BET) of from 0.5 to 150 m²/g as measured using nitrogen and the BET method according to ISO 9277:2010, preferably from 1 to 80 m²/g, and/or
iv) a residual total moisture content of ≤ 2 wt.-%, based on the total dry weight of the at least one calcium carbonate-comprising material, preferably ≤1.5 wt.-%, more preferably ≤ 1.2 wt.-%, and most preferably ≤0.8 wt.-%.

According to yet another embodiment, the at least one grafted polymer comprises at least one unsubstituted succinic anhydride group obtained by grafting maleic anhydride onto a homo- or copolymer comprising butadiene units and/or salty reaction products thereof and optionally styrene units.

According to another embodiment, the at least one grafted polymer is
a) a grafted polybutadiene homopolymer comprising at least one succinic anhydride group obtained by grafting maleic anhydride onto a polybutadiene homopolymer and having
   i) a number average molecular weight Mn measured by gel permeation chromatography from 1 000 to 20 000 g/mol, preferably from 1 400 to 15 000 g/mol, and more preferably from 2 000 to 10 000 g/mol, and/or
   ii) a number of functional groups per chain in the range from 2 to 12, preferably from 2 to 9, and more preferably from 2 to 6, and/or
   iii) an anhydride equivalent weight in the range from 400 to 2 200, preferably from 500 to 2 000, and more preferably from 550 to 1 800,
   or
b) a grafted polybutadiene-styrene copolymer comprising at least one succinic anhydride group obtained by grafting maleic anhydride onto a polybutadiene-styrene copolymer and having a 1,2 vinyl content from 20 to 80 mol.-%, preferably from 20 to 40 mol.-%, based on the total weight of the grafted polybutadiene-styrene copolymer.

According to one embodiment, the composition comprises the at least one calcium carbonate-comprising material and the at least one grafted polymer and/or the salty reaction products thereof as physical mixture and/or in that the at least one grafted polymer and/or the salty reaction products thereof are present on the surface of the at least one calcium carbonate-comprising material in form of a treatment layer.

According to a further aspect of the present invention, a polyester mixture comprising
a) a polyester resin, and
b) from 3 to 82 wt.-%, based on the total weight of the mixture, of the composition as defined herein,
wherein the composition is dispersed in the polyester resin.

According to one embodiment, the polyester resin consists of one or more saturated polyester resins selected from the group comprising polylactic acid, polylactic acid-based polymer, aliphatic polyester such as polyhydroxyalkanoates, e.g. polyhydroxybutyrate, poly-3- hydroxybutyrate (P3HB), polyhydroxyvalerate, polyhydroxybutyrate-polyhydroxyvalerate copolymer, poly(3- hydroxybutyrate-co-3-hydroxyvalerate); polyethylene terephthalate (PET), polybutylene terephthalate (PBT), polybutyrate-adipate-terephthalate (PBAT), polyglycolide, poly(dioxanone) and mixtures thereof, preferably selected from the group comprising polylactic acid, polylactic acid-based polymer and mixtures thereof.

According to another embodiment, the polyester resin has
i) a number average molecular weight Mn measured by gel permeation chromatography from 5 000 to 200 000 g/mol, preferably from 10 000 to 100 000 g/mol, and more preferably from 15000 to 80000 g/mol, and/or
ii) a specific gravity measured according to ASTM D782 from 0.5 to 5, preferably from 0.7 to 4, and more preferably from 1 to 3, and/or
iii) a glass transition temperature Tg measured by differential scanning calorimetry (DSC) in the range from 35 to 90°C, preferably from 40 to 70 °C, and more preferably from 45 to 70 °C.

According to yet another embodiment, the polyester resin consists of polylactic acid, preferably polylactic acid having from 1 to 10 wt.-%, more preferably between 4 to 6 wt.-% of D-isomers, based on the total weight of the polylactic acid.

According to one embodiment, the mixture further comprises additives such as colouring pigments, fibers, e.g. cellulose, glass or wood fibers, dyes, waxes, lubricants, oxidative- and/or UV-stabilizers, antioxidants and other fillers, such as carbon black, TiO₂, mica, clay, precipitated silica, talc or calcined kaolin.

According to still a further aspect of the present invention, a polyester product is provided formed from the polyester mixture defined herein.

A process for preparing a polyester product as defined herein is provided, wherein the process comprises the steps of
a) providing a polyester resin,
b) providing from 3 to 82 wt.-%, based on the total weight of the polyester product, of at least one calcium carbonate-comprising material as filler,
c) providing from 0.1 to 8 wt.-%, based on the total weight of the calcium carbonate-comprising material, of at least one grafted polymer comprising at least one succinic anhydride group obtained by grafting maleic anhydride onto a homo- or copolymer comprising butadiene units and optionally styrene units,
d) optionally providing further additives such as colouring pigments, fibers, e.g. cellulose, glass or wood fibers, dyes, waxes, lubricants, oxidative- and/or UV-stabilizers, antioxidants and other fillers, such as carbon black, TiO₂, mica, clay, precipitated silica, talc or calcined kaolin,
e) contacting the components of step a), step b), step c) and optionally step d) in any order, and
f) forming the mixture of step e) such that a polyester product is obtained.

According to one embodiment, in contacting step e) firstly the at least one calcium carbonate-comprising material of step b) is contacted under mixing, in one or more steps, with the at least one grafted polymer of step c) such that a treatment layer comprising the at least one grafted polymer and/or salty reaction product(s) thereof is formed on the surface of said at least one calcium carbonate-comprising material of step b), and secondly this surface-treated calcium carbonate-comprising material is contacted under mixing, in one or more steps, with the polyester resin of step a).

According to another embodiment, contacting step e) is carried out during forming step f) in that the at least one grafted polymer is contacted under mixing with the polyester resin of step a) before or after, preferably after, adding the at least one calcium carbonate-comprising material.

According to still a further aspect of the present invention, the use of at least one grafted polymer comprising at least one succinic anhydride group obtained by grafting maleic anhydride onto a homo- or copolymer comprising butadiene units and optionally styrene units in the preparation of a polyester product formed from a polyester mixture comprising a polyester resin and at least one calcium carbonate-comprising material as filler is provided, to decrease the melt flow rate of such a polyester product by at least 5 % preferably 10%, measured according to DIN EN ISO 1133-1:2011, in comparison to the same polyester product formed from the same polyester mixture comprising the polyester resin and at least one calcium carbonate-comprising material but without the at least one grafted polymer comprising at least one succinic anhydride group obtained by grafting maleic anhydride onto a homo- or copolymer comprising butadiene and optionally styrene units.

According to still a further aspect of the present invention, an article formed from the polyester product defined herein is provided, wherein the article is selected from the group comprising hygiene products, medical and healthcare products, filter products, geotextile products, agriculture and horticulture products, clothing, footwear and baggage products, household and industrial products, packaging products, construction products, automotive parts, bottles, cups, and the like.

It should be understood that for the purpose of the present invention, the following terms have the following meaning:
The term "acid" as used herein refers to an acid in the meaning of the definition by Brønsted and Lowry (e.g., H₂SO₄, HSO₄⁻), wherein the term "free acid" refers only to those acids being in the fully protonated form (e.g., H₂SO₄).

As used herein the term "polymer" generally includes homopolymers and co-polymers such as, for example, block, graft, random and alternating copolymers, as well as blends and modifications thereof. The polymer can be an amorphous polymer, a crystalline polymer, or a semi-crystalline polymer, i.e. a polymer comprising crystalline and amorphous fractions. The degree of crystallinity is specified in percent and can be determined by differential scanning calorimetry (DSC). An amorphous polymer may be characterized by its glass transition temperature and a crystalline polymer may be characterized by its melting point. A semi-crystalline polymer may be characterized by its glass transition temperature and/or its melting point.

The term "copolymer" as used herein refers to a polymer derived from more than one species of monomer. Copolymers that are obtained by copolymerization of two monomer species may also be termed bipolymers, those obtained from three monomers terpolymers, those obtained from four monomers quaterpolymers, etc. (cf. IUPAC Compendium of Chemical Terminology 2014, "copolymer"). Accordingly, the term "homopolymer" refers to a polymer derived from one species of monomer.

The term "glass transition temperature" in the meaning of the present invention refers to the temperature at which the glass transition occurs, which is a reversible transition in amorphous materials (or in amorphous regions within semi-crystalline materials) from a hard and relatively brittle state into a molten or rubber-like state. The glass-transition temperature is always lower than the melting point of the crystalline state of the material, if one exists. The term "melting point" in the meaning of the present invention refers to the temperature at which a solid changes state from solid to liquid at atmospheric pressure. At the melting point the solid and liquid phase exist in equilibrium. Glass-transition temperature and melting point are determined by ISO 11357 with a heating rate of 10°C/min.

The term "surface-treated" in the meaning of the present invention refers to a material which has been contacted with a surface treatment agent such as to obtain a coating layer on at least a part of the surface of the material.

The "particle size" of particulate materials is described herein by its weight-based distribution of particle sizes dₓ. Therein, the value dₓ represents the diameter relative to which x % by weight of the particles have diameters less than dₓ. This means that, for example, the d₂₀ value is the particle size at which 20 wt.-% of all particles are smaller than that particle size. The d₅₀ value is thus the weight median particle size, i.e. 50 wt.-% of all particles are smaller than this particle size. For the purpose of the present invention, the particle size is specified as weight median particle size d₅₀(wt) unless indicated otherwise. Particle sizes were determined by using a Sedigraph^{™} 5120 instrument of Micromeritics Instrument Corporation. The method and the instrument are known to the skilled person and are commonly used to determine the particle size of fillers and pigments. The measurements were carried out in an aqueous solution of 0.1 wt.-% Na₄P₂O₇.

A "salt" in the meaning of the present invention is a chemical compound consisting of an assembly of cations and anions (cf. IUPAC, Compendium of Chemical Terminology, 2nd Ed. (the "gold book"), 1997, "salt").

The "specific surface area" (expressed in m²/g) of a material as used throughout the present document can be determined by the Brunauer Emmett Teller (BET) method with nitrogen as adsorbing gas and by use of a ASAP 2460 instrument from Micromeritics. The method is well known to the skilled person and defined in ISO 9277:2010. Samples are conditioned at 100 °C under vacuum for a period of 30 min prior to measurement. The total surface area (in m²) of said material can be obtained by multiplication of the specific surface area (in m²/g) and the mass (in g) of the material.

For the purpose of the present invention, the "solids content" of a liquid composition is a measure of the amount of material remaining after all the solvent or water has been evaporated. If necessary, the "solids content" of a suspension given in wt. % in the meaning of the present invention can be determined using a Moisture Analyzer HR73 from Mettler-Toledo (T = 120 °C, automatic switch off 3, standard drying) with a sample size of 5 to 20 g.

Unless specified otherwise, the term "drying" refers to a process according to which at least a portion of water is removed from a material to be dried such that a constant weight of the obtained "dried" material at 200°C is reached. Moreover, a "dried" or "dry" material may be defined by its total moisture content which, unless specified otherwise, is less than or equal to 2 wt. %, preferably less than or equal to 1.2 wt. %, more preferably less than or equal to 0.8 wt. %, and most preferably between 0.04 and 0.3 wt. %, based on the total weight of the dried material.

For the purpose of the present invention, the term "viscosity" or "Brookfield viscosity" refers to Brookfield viscosity. The Brookfield viscosity can for this purpose be measured by a Brookfield DV-II+ Pro viscometer at 25 °C ± 1 °C at 100 rpm using an appropriate spindle of the Brookfield RV-spindle set and is specified in mPa·s or cPs. Based on his technical knowledge, the skilled person will select a spindle from the Brookfield RV-spindle set which is suitable for the viscosity range to be measured. For example, for a Brookfield viscosity range between 200 and 800 mPa·s the spindle number 3 may be used, for a viscosity range between 400 and 1 600 mPa·s the spindle number 4 may be used, for a viscosity range between 800 and 3 200 mPa·s the spindle number 5 may be used, for a viscosity range between 1 000 and 2 000 000 mPa·s the spindle number 6 may be used, and for a viscosity range between 4 000 and 8 000 000 mPa·s the spindle number 7 may be used.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined hereinabove.

The composition of the present invention comprises a calcium carbonate-comprising material selected from among ground calcium carbonate (GCC), precipitated calcium carbonate (PCC) and mixtures thereof, and from 0.1 to 8 wt.-%, based on the total weight of the calcium carbonate-comprising material, of at least one grafted polymer comprising at least one succinic anhydride group obtained by grafting maleic anhydride onto a homo- or copolymer comprising butadiene units and optionally styrene units and/or salty reaction products thereof.

In the following, preferred embodiments of the inventive products will be set out in more detail. It is to be understood that these embodiments and details also apply to the inventive methods for their preparation and their uses described herein.

### The calcium carbonate-comprising material

The composition of the present invention comprises a calcium carbonate-comprising material selected from among ground calcium carbonate (GCC), precipitated calcium carbonate (PCC) and mixtures thereof.

In one embodiment, the composition comprises a calcium carbonate-comprising material being ground calcium carbonate (GCC) or precipitated calcium carbonate (PCC). Alternatively, the composition comprises a calcium carbonate-comprising material being a mixture of ground calcium carbonate (GCC) and precipitated calcium carbonate (PCC). More preferably, the composition comprises a calcium carbonate-comprising material being ground calcium carbonate (GCC).

If the calcium carbonate-comprising material is a mixture of ground calcium carbonate (GCC) and precipitated calcium carbonate (PCC), the weight ratio of ground calcium carbonate (GCC) to precipitated calcium carbonate (PCC) [GCC:PCC] is preferably from 1:99 to 99:1, more preferably from 75:25 to 25:75, e.g. about 50:50.

When forming the composition, the calcium carbonate-comprising material may be provided in any suitable dry form. For example, the calcium carbonate-comprising material may be in form of a powder and/or in pressed or granulated form. For example, if the calcium carbonate-comprising material is ground calcium carbonate (GCC) and/or precipitated calcium carbonate (PCC), the residual total moisture content is preferably of ≤ 2 wt.-%, based on the total dry weight of the at least one calcium carbonate-comprising material, more preferably ≤ 1.5 wt.-%, even more preferably ≤ 1.2 wt.-%, and most preferably ≤ 0.8 wt.-%. Additionally or alternatively, the residual total moisture content is preferably ≥ 0.001 wt.-%, based on the total dry weight of the at least one calcium carbonate-comprising material, more preferably ≥ 0.002 wt.-%, and most preferably ≥ 0.005 wt.-%.

In one embodiment, the residual total moisture content is preferably from 0.001 wt.-% to 2 wt.-%, based on the total dry weight of the at least one calcium carbonate-comprising material, more preferably from 0.001 wt.-% to 1.5 wt.-%, even more preferably from 0.002 wt.-% to 1.2 wt.-%, and most preferably from 0.005 wt.-% to 0.8 wt.-%.

"Ground calcium carbonate" (also called "sedimentary ground calcium carbonate") (GCC) in the meaning of the present invention is a calcium carbonate obtained from sedimentary sources, such as marble, limestone, dolomite, chalk and/or mixtures thereof, and processed through a wet and/or dry treatment such as grinding, screening and/or fractionating, for example, by a cyclone or classifier. According to one embodiment, the ground calcium carbonate (GCC) is selected from the group consisting of marble, limestone, dolomite, chalk and mixtures thereof. The ground calcium carbonate may comprise further components occurring in sedimentary sources such as magnesium carbonate, alumino silicate etc. Thus, it is appreciated that the term "ground" calcium carbonate is not understood to refer to a calcium carbonate obtained by milling, but rather refers to the sedimentary origin of the calcium carbonate.

Preferably, the ground calcium carbonate is a sedimentary ground calcium carbonate (GCC). The term "sedimentary" ground calcium carbonate refers to calcium carbonate that is formed by the accumulation or deposition of calcium carbonate particles and subsequent cementation of the particles on the floor of oceans or other bodies of water at the earth's surface.

"Dolomite" in the meaning of the present invention is a calcium carbonate containing mineral, namely a carbonic calcium-magnesium-mineral, having the chemical composition of CaMg(CO₃)₂ ("CaCO₃ · MgCO₃"). A dolomite mineral may contain at least 30.0 wt.-% MgCO₃, based on the total weight of dolomite, preferably more than 35.0 wt.-%, and more preferably more than 40.0 wt.-% MgCO₃.

In general, the grinding of ground calcium carbonate may be a dry or wet grinding step and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. In case the calcium carbonate-comprising material comprises a wet ground calcium carbonate containing mineral material, the grinding step may be performed under conditions such that autogenous grinding takes place and/or by horizontal ball milling, and/or other such processes known to the skilled man. The wet processed ground calcium carbonate-comprising material thus obtained may be washed and dewatered by well-known processes, e.g. by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

"Precipitated calcium carbonate" (PCC) in the meaning of the present invention is a synthesized material, generally obtained by precipitation following reaction of carbon dioxide and calcium hydroxide in an aqueous, semi-dry or humid environment or by precipitation of calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried. PCCs are described, for example, in EP2447213 A1, EP2524898 A1, EP2371766 A1, EP1712597 A1, EP1712523 A1, or WO2013/142473 A1. According to one embodiment of the present invention, the precipitated calcium carbonate is precipitated calcium carbonate, preferably selected from the group consisting of the aragonitic, vateritic and calcitic mineralogical crystal forms, colloidal PCC, and mixtures thereof.

According to one embodiment, the ground calcium carbonate (GCC) is selected from the group consisting of marble, limestone, dolomite, chalk and mixtures thereof, or the precipitated calcium carbonate (PCC) is selected from the group consisting of the aragonitic, vateritic and calcitic mineralogical crystal forms, colloidal PCC, and mixtures thereof.

Preferably, the calcium carbonate-comprising material is ground calcium carbonate (GCC) such as marble, limestone or chalk. More preferably, the calcium carbonate-comprising material is ground calcium carbonate (GCC) such as marble or limestone. Most preferably, the calcium carbonate-comprising material is ground calcium carbonate (GCC) being marble.

If the calcium carbonate-comprising material is ground calcium carbonate (GCC) and/or precipitated calcium carbonate (PCC), the calcium carbonate-comprising material preferably has a weight median particle size *d*₅₀ value measured by the sedimentation method in the range from 0.1 µm to 10 µm, preferably in the range from 0.15 µm to 5 µm, more preferably in the range from 0.2 µm to 3 µm and most preferably in the range from 0.25 µm to 3 µm, e.g. from 0.3 µm to 2 µm or from 0.3 µm to 1.5 µm.

Additionally or alternatively, the calcium carbonate-comprising material has a top cut (*d*₉₈) measured by the sedimentation method of ≤ 45 µm, preferably of ≤ 30 µm, more preferably of ≤ 20 µm and most preferably of ≤ 15 µm.

In a preferred embodiment, the calcium carbonate-comprising material has a weight median particle size *d*₅₀ value measured by the sedimentation method in the range from 0.1 µm to 10 µm, preferably in the range from 0.15 µm to 5 µm, more preferably in the range from 0.2 µm to 3 µm and most preferably in the range from 0.25 µm to 3 µm, e.g. from 0.3 µm to 2 µm or from 0.3 µm to 1.5 µm and has a top cut (*d*₉₈) measured by the sedimentation method of ≤ 45 µm, preferably of ≤ 30 µm, more preferably of ≤ 20 µm and most preferably of ≤ 15 µm.

Additionally or alternatively, the calcium carbonate-comprising material has a specific surface area (BET) of from 0.5 to 150 m²/g as measured using nitrogen and the BET method according to ISO 9277:2010, preferably from 1 to 80 m²/g, more preferably from 2 to 75 m²/g, even more preferably from 2 to 40 m²/g, still more preferably from 3 to 35 m²/g, and most preferably from 3 to 25 m²/g. In a specifically preferred embodiment, the calcium carbonate-comprising material has a specific surface area (BET) of from 5 to 25 m²/g as measured using nitrogen and the BET method according to ISO 9277:2010.

In a preferred embodiment, the calcium carbonate-comprising material has a weight median particle size *d*₅₀ value measured by the sedimentation method in the range from 0.1 µm to 10 µm, preferably in the range from 0.15 µm to 5 µm, more preferably in the range from 0.2 µm to 3 µm and most preferably in the range from 0.25 µm to 3 µm, e.g. from 0.3 µm to 2 µm or from 0.3 µm to 1.5 µm and has a top cut (*d*₉₈) measured by the sedimentation method of ≤ 45 µm, preferably of ≤ 30 µm, more preferably of ≤ 20 µm and most preferably of ≤ 15 µm and has a specific surface area (BET) of from 0.5 to 150 m²/g as measured using nitrogen and the BET method according to ISO 9277:2010, preferably from 1 to 80 m²/g, more preferably from 2 to 75 m²/g, even more preferably from 2 to 40 m²/g, still more preferably from 3 to 35 m²/g, and most preferably from 3 to 25 m²/g, e.g. from 5 to 25 m²/g.

Additionally or alternatively, the calcium carbonate-comprising material has a residual total moisture content of from 0.001 wt.-% to 2 wt.-%, based on the total dry weight of the at least one calcium carbonate-comprising material, preferably from 0.001 wt.-% to 1.5 wt.-%, more preferably from 0.002 wt.-% to 1.2 wt.-%, and most preferably from 0.005 wt.-% to 0.8 wt.-%

For example, the calcium carbonate-comprising material has
i) a weight median particle size *d*₅₀ value measured by the sedimentation method in the range from 0.1 µm to 10 µm, preferably in the range from 0.15 µm to 5 µm, more preferably in the range from 0.2 µm to 3 µm and most preferably in the range from 0.25 µm to 3 µm, e.g. from 0.3 µm to 2 µm or from 0.3 µm to 1.5 µm, or
ii) a top cut (*d*₉₈) measured by the sedimentation method of ≤ 45 µm, preferably of ≤ 30 µm, more preferably of ≤ 20 µm and most preferably of ≤ 15 µm, or
iii) a specific surface area (BET) of from 0.5 to 150 m²/g as measured using nitrogen and the BET method according to ISO 9277:2010, preferably from 1 to 80 m²/g, more preferably from 2 to 75 m²/g, even more preferably from 2 to 40 m²/g, still more preferably from 3 to 35 m²/g, and most preferably from 3 to 25 m²/g, e.g. from 5 to 25 m²/g, or
iv) a residual total moisture content of ≤ 2 wt.-%, based on the total dry weight of the at least one calcium carbonate-comprising material, preferably ≤ 1.5 wt.-%, more preferably ≤ 1.2 wt.-%, and most preferably ≤ 0.8 wt.-%..

Alternatively, the calcium carbonate-comprising material has
i) a weight median particle size *d*₅₀ value measured by the sedimentation method in the range from 0.1 µm to 10 µm, preferably in the range from 0.15 µm to 5 µm, more preferably in the range from 0.2 µm to 3 µm and most preferably in the range from 0.25 µm to 3 µm, e.g. from 0.3 µm to 2 µm or from 0.3 µm to 1.5 µm, and
ii) a top cut (*d*₉₈) measured by the sedimentation method of ≤ 45 µm, preferably of ≤ 30 µm, more preferably of ≤ 20 µm and most preferably of ≤ 15 µm, and
iii) a specific surface area (BET) of from 0.5 to 150 m²/g as measured using nitrogen and the BET method according to ISO 9277:2010, preferably from 1 to 80 m²/g, more preferably from 2 to 75 m²/g, even more preferably from 2 to 40 m²/g, still more preferably from 3 to 35 m²/g, and most preferably from 3 to 25 m²/g, e.g. from 5 to 25 m²/g, and
iv) a residual total moisture content of ≤ 2 wt.-%, based on the total dry weight of the at least one calcium carbonate-comprising material, preferably ≤ 1.5 wt.-%, more preferably ≤ 1.2 wt.-%, and most preferably ≤ 0.8 wt.-%..

### The grafted polymer

The composition of the present invention comprises a calcium carbonate-comprising material selected from among ground calcium carbonate (GCC), precipitated calcium carbonate (PCC) and mixtures thereof, and from 0.1 to 8 wt.-%, based on the total weight of the calcium carbonate-comprising material, of at least one grafted polymer comprising at least one succinic anhydride group obtained by grafting maleic anhydride onto a homo- or copolymer comprising butadiene units and optionally styrene units and/or salty reaction products thereof.

It is appreciated that the "at least one grafted polymer" comprises, preferably consists of, one or more grafted polymer(s). For example, the "at least one grafted polymer" comprises, preferably consists of, one grafted polymer. Alternatively, the "at least one grafted polymer" comprises, preferably consists of, two or more, preferably two, grafted polymers.

Preferably, the "at least one grafted polymer" comprises, preferably consists of, one grafted polymer comprising at least one succinic anhydride group obtained by grafting maleic anhydride onto a homo- or copolymer comprising butadiene units and optionally styrene units and/or salty reaction products thereof.

It is appreciated that the at least one grafted polymer may be used as surface-treatment agent. A "surface-treatment agent" in the meaning of the present invention is a material, which is capable of reacting and/or forming an adduct with the surface of the calcium carbonate-comprising material, thereby forming a (surface) treatment layer on at least a part of the surface of the calcium carbonate-comprising material.

It is appreciated that the at least one grafted polymer comprises at least one succinic anhydride group obtained by grafting maleic anhydride onto a homo- or copolymer comprising butadiene units and optionally styrene units and/or salty reaction products thereof. The term "at least one" succinic anhydride group obtained by grafting maleic anhydride onto a homo- or copolymer comprising butadiene units and optionally styrene units and/or salty reaction products thereof in the meaning of the present invention means that the grafted polymer comprises, preferably consists of, one or more succinic anhydride group(s) obtained by grafting maleic anhydride onto a homo- or copolymer comprising butadiene units and optionally styrene units and/or salty reaction products thereof.

In view of this, the at least one grafted polymer preferably comprises one or more succinic anhydride group(s) obtained by grafting maleic anhydride onto a homo- or copolymer. For example, the at least one grafted polymer comprises one succinic anhydride group obtained by grafting maleic anhydride onto a homo- or copolymer. Alternatively, the at least one grafted polymer comprises two or more succinic anhydride groups obtained by grafting maleic anhydride onto a homo- or copolymer, e.g. from 2 to 12, particularly from 2 to 9 such as from 2 to 6, succinic anhydride groups.

The term "grafted" or "maleic anhydride grafted" means that a succinic anhydride is obtained after reaction of substituent(s) R¹ and/or R² comprising a carbon-carbon double bond with the double bond of maleic anhydride. Thus, the terms "grafted homopolymer" and "grafted copolymer" refer to a corresponding homopolymer and copolymer each bearing succinic anhydride moieties formed from the reaction of a carbon-carbon double bond with the double bond of maleic anhydride, respectively. It is appreciated the at least one grafted polymer or maleic anhydride grafted polymer may be also referred to as "polymer, e.g. polybutadiene, functionalized with maleic anhydride" or "polymer, e.g. polybutadiene, adducted maleic anhydride".

It is appreciated that the at least one succinic anhydride group may be present as salt, preferably in the form of the sodium or potassium salt.

Preferably, the one or more succinic anhydride group(s) of the at least one grafted polymer is/are suitable for reacting with the calcium carbonate-comprising material.

According to one embodiment, the at least one grafted polymer comprises at least one unsubstituted succinic anhydride group obtained by grafting maleic anhydride onto a homo- or copolymer comprising butadiene units and/or salty reaction products thereof and optionally styrene units. The term "unsubstituted" succinic anhydride group obtained by grafting maleic anhydride onto a homo- or copolymer comprising butadiene units and/or salty reaction products thereof and optionally styrene units means that the succinic anhydride group comprises only substituents which are linked to the homo- or copolymer backbone. In other words, the succinic anhydride group is free of substituents which are not linked to the homo- or copolymer backbone.

That is to say, the at least one grafted polymer is preferably a grafted polybutadiene homopolymer comprising at least one succinic anhydride group obtained by grafting maleic anhydride onto a polybutadiene homopolymer or a grafted polybutadiene-styrene copolymer comprising at least one succinic anhydride group obtained by grafting maleic anhydride onto a polybutadiene-styrene copolymer. For example, the at least one grafted polymer is preferably a grafted polybutadiene homopolymer comprising at least one unsubstituted succinic anhydride group obtained by grafting maleic anhydride onto a polybutadiene homopolymer or a grafted polybutadiene-styrene copolymer comprising at least one unsubstituted succinic anhydride group obtained by grafting maleic anhydride onto a polybutadiene-styrene copolymer. More preferably, the at least one grafted polymer is a grafted polybutadiene homopolymer comprising at least one succinic anhydride group obtained by grafting maleic anhydride onto a polybutadiene homopolymer. For example, the at least one grafted polymer is preferably a grafted polybutadiene homopolymer comprising at least one unsubstituted succinic anhydride group obtained by grafting maleic anhydride onto a polybutadiene homopolymer.

If the at least one grafted polymer is a grafted polybutadiene homopolymer comprising at least one (preferably unsubstituted) succinic anhydride group obtained by grafting maleic anhydride onto a polybutadiene homopolymer, the grafted polybutadiene homopolymer preferably has
i) a number average molecular weight Mn measured by gel permeation chromatography from 1 000 to 20 000 g/mol, preferably from 1 400 to 15 000 g/mol, and more preferably from 2 000 to 10 000 g/mol measured according to EN ISO 16014-1:2019, and/or
ii) a number of functional groups per chain in the range from 2 to 12, preferably from 2 to 9, and more preferably from 2 to 6, and/or
iii) an anhydride equivalent weight in the range from 400 to 2 200, preferably from 500 to 2 000, and more preferably from 550 to 1 800.

In one embodiment, the grafted polybutadiene homopolymer comprising at least one (preferably unsubstituted) succinic anhydride group obtained by grafting maleic anhydride onto a polybutadiene homopolymer preferably has
i) a number average molecular weight Mn measured by gel permeation chromatography from 1 000 to 20 000 g/mol, preferably from 1 400 to 15 000 g/mol, and more preferably from 2 000 to 10 000 g/mol measured according to EN ISO 16014-1:2019, or
ii) a number of functional groups per chain in the range from 2 to 12, preferably from 2 to 9, and more preferably from 2 to 6, or
iii) an anhydride equivalent weight in the range from 400 to 2 200, preferably from 500 to 2 000, and more preferably from 550 to 1 800.

In a preferred embodiment, the grafted polybutadiene homopolymer comprising at least one (preferably unsubstituted) succinic anhydride group obtained by grafting maleic anhydride onto a polybutadiene homopolymer preferably has
i) a number average molecular weight Mn measured by gel permeation chromatography from 1 000 to 20 000 g/mol, preferably from 1 400 to 15 000 g/mol, and more preferably from 2 000 to 10 000 g/mol measured according to EN ISO 16014-1:2019, and
ii) a number of functional groups per chain in the range from 2 to 12, preferably from 2 to 9, and more preferably from 2 to 6, and
iii) an anhydride equivalent weight in the range from 400 to 2 200, preferably from 500 to 2 000, and more preferably from 550 to 1 800.

Additionally or alternatively, the grafted polybutadiene homopolymer comprising at least one succinic anhydride group obtained by grafting maleic anhydride onto a polybutadiene homopolymer has an acid number in the range from 10 to 300 meq KOH per g of grafted polybutadiene homopolymer, preferably 20 to 200 meq KOH / g, more preferably 30 to 150 meq KOH / g, measured according to ASTM D974-14.

In one embodiment, the grafted polybutadiene homopolymer comprising at least one (preferably unsubstituted) succinic anhydride group obtained by grafting maleic anhydride onto a polybutadiene homopolymer thus has
i) a number average molecular weight Mn measured by gel permeation chromatography from 1 000 to 20 000 g/mol, preferably from 1 400 to 15 000 g/mol, and more preferably from 2 000 to 10 000 g/mol measured according to EN ISO 16014-1:2019, and
ii) a number of functional groups per chain in the range from 2 to 12, preferably from 2 to 9, and more preferably from 2 to 6, and
iii) an anhydride equivalent weight in the range from 400 to 2 200, preferably from 500 to 2 000, and more preferably from 550 to 1 800, and
iv) an acid number in the range from 10 to 300 meq KOH per g of grafted polybutadiene homopolymer, preferably 20 to 200 meq KOH / g, more preferably 30 to 150 meq KOH / g, measured according to ASTM D974-14.

Additionally or alternatively, the grafted polybutadiene homopolymer comprising at least one (preferably unsubstituted) succinic anhydride group obtained by grafting maleic anhydride onto a polybutadiene homopolymer has a Brookfield viscosity at 25°C in the range from 3 000 to 70 000 cPs, preferably in the range from 5 000 to 50 000 cPs. Alternatively, the grafted polybutadiene homopolymer comprising at least one (preferably unsubstituted) succinic anhydride group obtained by grafting maleic anhydride onto a polybutadiene homopolymer has a Brookfield viscosity at 55°C in the range from 100 000 to 170 000 cPs, preferably in the range from 120 000 to 160 000 cPs.

In one embodiment, the grafted polybutadiene homopolymer comprising at least one (preferably unsubstituted) succinic anhydride group obtained by grafting maleic anhydride onto a polybutadiene homopolymer thus has
i) a number average molecular weight Mn measured by gel permeation chromatography from 1 000 to 20 000 g/mol, preferably from 1 400 to 15 000 g/mol, and more preferably from 2 000 to 10 000 g/mol measured according to EN ISO 16014-1:2019, and
ii) a number of functional groups per chain in the range from 2 to 12, preferably from 2 to 9, and more preferably from 2 to 6, and
iii) an anhydride equivalent weight in the range from 400 to 2 200, preferably from 500 to 2 000, and more preferably from 550 to 1 800, and
iv) an acid number in the range from 10 to 300 meq KOH per g of grafted polybutadiene homopolymer, preferably 20 to 200 meq KOH / g, more preferably 30 to 150 meq KOH / g, measured according to ASTM D974-14, and
v) a Brookfield viscosity at 25°C in the range from 3 000 to 70 000 cPs, preferably in the range from 5 000 to 50 000 cPs.

The term "grafted" means that a succinic anhydride group is obtained obtained after reaction of substituent(s) R¹ and/or R² comprising a carbon-carbon double bond with the double bond of maleic anhydride.

For example, the grafted polybutadiene homopolymer comprising at least one (preferably unsubstituted) succinic anhydride group obtained by grafting maleic anhydride onto a polybutadiene homopolymer may have a number average molecular weight Mₙ measured by gel permeation chromatography from 1 000 to 20 000 g/mol, preferably from 1 400 to 15 000 g/mol, more preferably from 2 000 to 10 000 g/mol, an acid number in the range from 20 to 200 meq KOH per g of grafted polybutadiene homopolymer, preferably 30 to 150 meq KOH / g, measured according to ASTM D974-14. In another embodiment, the grafted polybutadiene homopolymer comprising at least one (preferably unsubstituted) succinic anhydride group obtained by grafting maleic anhydride onto a polybutadiene homopolymer may have a number average molecular weight Mₙ measured by gel permeation chromatography from 2000 to 5000 g/mol, an acid number in the range from 30 to 100 meq KOH / g, measured according to ASTM D974-14.

In one embodiment, the grafted polybutadiene homopolymer comprising at least one (preferably unsubstituted) succinic anhydride group obtained by grafting maleic anhydride onto a polybutadiene homopolymer has a number average molecular weight Mn measured by gel permeation chromatography from 2 000 to 10 000 g/mol, preferably from 2 000 to 4 500 g/mol or from 4 500 to 7 000 g/mol, a number of functional groups per chain in the range from 2 to 6, preferably from 2 to 4 or from 4 to 6, an anhydride equivalent weight in the range from 550 to 1 800, preferably from 550 to 1 000 or from 1 000 to 1 800, and a Brookfield viscosity at 25°C in the range from 5 000 to 50 000 cPs, preferably from 5 000 to 10 000 cPs or from 35 000 to 50 000 cPs.

For example, the grafted polybutadiene homopolymer comprising at least one (preferably unsubstituted) succinic anhydride group obtained by grafting maleic anhydride onto a polybutadiene homopolymer has a number average molecular weight Mn measured by gel permeation chromatography from 2 000 to 4 500 g/mol, a number of functional groups per chain in the range from 2 to 4, an anhydride equivalent weight in the range from 1 000 to 1 800, and a Brookfield viscosity at 25°C in the range from 5 000 to 10 000 cPs. In an alternative embodiment, the grafted polybutadiene homopolymer comprising at least one (preferably unsubstituted) succinic anhydride group obtained by grafting maleic anhydride onto a polybutadiene homopolymer has a number average molecular weight Mn measured by gel permeation chromatography from 4 500 to 7 000 g/mol, a number of functional groups per chain in the range from 4 to 6, an anhydride equivalent weight in the range from 550 to 1 000, and a Brookfield viscosity at 25°C in the range from 35 000 to 50 000 cPs. In an alternative embodiment, the grafted polybutadiene homopolymer comprising at least one (preferably unsubstituted) succinic anhydride group obtained by grafting maleic anhydride onto a polybutadiene homopolymer has a number average molecular weight Mn measured by gel permeation chromatography from 2 500 to 4 500 g/mol, a number of functional groups per chain in the range from 2 to 4, an anhydride equivalent weight in the range from 550 to 1 000, and a Brookfield viscosity at 55°C in the range from 120 000 to 160 000 cPs.

Additionally or alternatively, the at least one grafted polymer is a grafted polybutadiene-styrene copolymer comprising at least one (preferably unsubstituted) succinic anhydride group obtained by grafting maleic anhydride onto a polybutadiene-styrene copolymer and having
i) a number average molecular weight Mn measured by gel permeation chromatography from 1 000 to 20 000 g/mol, preferably from 1 400 to 15 000 g/mol, and more preferably from 2 000 to 10 000 g/mol measured according to EN ISO 16014-1:2019, and/or
ii) a number of functional groups per chain in the range from 2 to 12, preferably from 2 to 9, and more preferably from 2 to 6, and/or
iii) an anhydride equivalent weight in the range from 400 to 2 200, preferably from 500 to 2 000, and more preferably from 550 to 1 800, and/or
iv) a 1,2 vinyl content from 20 to 80 mol.-%, preferably from 20 to 40 mol.-%, based on the total weight of the grafted polybutadiene-styrene copolymer.

In one embodiment, the grafted polybutadiene-styrene copolymer comprising at least one (preferably unsubstituted) succinic anhydride group obtained by grafting maleic anhydride onto a polybutadiene-styrene copolymer preferably has
i) a number average molecular weight Mn measured by gel permeation chromatography from 1 000 to 20 000 g/mol, preferably from 1 400 to 15 000 g/mol, and more preferably from 2 000 to 10 000 g/mol measured according to EN ISO 16014-1:2019, or
ii) a number of functional groups per chain in the range from 2 to 12, preferably from 2 to 9, and more preferably from 2 to 6, or
iii) an anhydride equivalent weight in the range from 400 to 2 200, preferably from 500 to 2 000, and more preferably from 550 to 1 800, or
iv) a 1,2 vinyl content from 20 to 80 mol.-%, preferably from 20 to 40 mol.-%, based on the total weight of the grafted polybutadiene-styrene copolymer.

In a preferred embodiment, the grafted polybutadiene-styrene copolymer comprising at least one (preferably unsubstituted) succinic anhydride group obtained by grafting maleic anhydride onto a polybutadiene-styrene copolymer preferably has
i) a number average molecular weight Mn measured by gel permeation chromatography from 1 000 to 20 000 g/mol, preferably from 1 400 to 15 000 g/mol, and more preferably from 2 000 to 10 000 g/mol measured according to EN ISO 16014-1:2019, and
ii) a number of functional groups per chain in the range from 2 to 12, preferably from 2 to 9, and more preferably from 2 to 6, and
iii) an anhydride equivalent weight in the range from 400 to 2 200, preferably from 500 to 2 000, and more preferably from 550 to 1 800, and
iv) a 1,2 vinyl content from 20 to 80 mol.-%, preferably from 20 to 40 mol.-%, based on the total weight of the grafted polybutadiene-styrene copolymer.

Additionally or alternatively, the (grafted polybutadiene-styrene copolymer comprising at least one (preferably unsubstituted) succinic anhydride group obtained by grafting maleic anhydride onto a polybutadiene-styrene copolymer has a Brookfield viscosity at 45°C in the range from 100 000 to 200 000 cPs, preferably in the range from 150 000 to 200 000 cPs.

In one embodiment, the grafted polybutadiene-styrene copolymer comprising at least one (preferably unsubstituted) succinic anhydride group obtained by grafting maleic anhydride onto a polybutadiene-styrene copolymer has a number average molecular weight Mn measured by gel permeation chromatography from 2 000 to 10 000 g/mol, a number of functional groups per chain in the range from 2 to 6, an anhydride equivalent weight in the range from 550 to 1 800, and a Brookfield viscosity at 45°C in the range from 150 000 to 200 000 cPs.

The composition of the present invention is formed from the calcium carbonate-comprising material and from 0.1 to 8 wt.-%, based on the total weight of the calcium carbonate-comprising material, of the at least one grafted polymer comprising at least one succinic anhydride group obtained by grafting maleic anhydride onto a homo- or copolymer comprising butadiene units and optionally styrene units. Preferably, the composition of the present invention is formed from the calcium carbonate-comprising material and from 0.6 to 7 wt.-%, based on the total weight of the calcium carbonate-comprising material, of the at least one grafted polymer comprising at least one succinic anhydride group obtained by grafting maleic anhydride onto a homo- or copolymer comprising butadiene units and optionally styrene units.

Thus, the composition comprises the calcium carbonate-comprising material selected from among ground calcium carbonate (GCC), precipitated calcium carbonate (PCC) and mixtures thereof, and from 0.1 to 8 wt.-%, based on the total weight of the calcium carbonate-comprising material, of the at least one grafted polymer comprising at least one succinic anhydride group obtained by grafting maleic anhydride onto a homo- or copolymer comprising butadiene units and optionally styrene units and/or salty reaction products thereof. Preferably, the composition comprises the calcium carbonate-comprising material selected from among ground calcium carbonate (GCC), precipitated calcium carbonate (PCC) and mixtures thereof, and from 0.6 to 7 wt.-%, based on the total weight of the calcium carbonate-comprising material, of the at least one grafted polymer comprising at least one succinic anhydride group obtained by grafting maleic anhydride onto a homo- or copolymer comprising butadiene units and optionally styrene units and/or salty reaction products thereof.

The composition comprises the at least one calcium carbonate-comprising material and the at least one grafted polymer and/or the salty reaction products thereof preferably in that the at least one grafted polymer and/or the salty reaction products thereof are present on the surface of the at least one calcium carbonate-comprising material in form of a treatment layer. For example, a treatment layer is preferably formed on the surface of the at least one calcium carbonate-comprising material by contacting the calcium carbonate-comprising material with said at least one grafted polymer in an amount from 0.1 to 8 wt.-%, based on the total weight of the calcium carbonate-comprising material, more preferably, from 0.6 to 7 wt.-%.

In one embodiment, the treatment layer on at least a part of the surface of the calcium carbonate-comprising material is formed by contacting the calcium carbonate-comprising material with the grafted polybutadiene homopolymer comprising at least one succinic anhydride group obtained by grafting maleic anhydride onto a polybutadiene homopolymer, and having a number average molecular weight Mn measured by gel permeation chromatography from 1 000 to 20 000 g/mol, preferably from 1 400 to 15 000 g/mol, more preferably from 2 000 to 10 000 g/mol, an acid number in the range from 20 to 200 meq KOH per g of grafted polybutadiene homopolymer, preferably 30 to 150 meq KOH / g, measured according to ASTM D974-14, in an amount from 0.5 to 10 wt.-%, based on the total weight of the calcium carbonate-comprising material, more preferably, 0.5 to 8 wt.-%, and most preferably 0.6 to 7 wt.-% or in an amount from 0.1 to 10 mg / m² of calcium carbonate-comprising material surface, preferably 0.1 to 8 mg / m², more preferably 0.11 to 3 mg / m².

Alternatively, the treatment layer on at least a part of the surface of the calcium carbonate-comprising material is formed by contacting the calcium carbonate-comprising material with the grafted polybutadiene-styrene copolymer comprising at least one succinic anhydride group obtained by grafting maleic anhydride onto a polybutadiene-styrene copolymer and having a number average molecular weight Mₙ measured by gel permeation chromatography from 1 000 to 20 000 g/mol, preferably from 1 400 to 15 000 g/mol, more preferably from 2 000 to 10 000 g/mol, an acid number in the range from 20 to 200 meq KOH per g grafted polybutadiene homopolymer, preferably 30 to 150 meq KOH / g, measured according to ASTM D974-14, and/or a molar amount of 1,2-vinyl groups in the range from 20 to 80 mol-%, preferably 20 to 40 mol-%, in an amount from 0.5 to 10 wt.-%, based on the total weight of the calcium carbonate-comprising material, more preferably, 0.5 to 8 wt.-%, and most preferably 0.6 to 7 wt.-% or in an amount from 0.1 to 10 mg / m² of calcium carbonate-comprising material surface, preferably 0.1 to 8 mg / m², more preferably 0.11 to 3 mg / m².

In one embodiment, the at least one grafted polymer is a grafted polybutadiene homopolymer comprising at least one succinic anhydride group obtained by grafting maleic anhydride onto a polybutadiene homopolymer and having a Brookfield viscosity at 25°C in the range from 1 000 to 300 000 mPas, and/or an acid number in the range from 10 to 300 mg potassium hydroxide per g grafted polybutadiene homopolymer and/or an iodine number in the range from 100 to 1 000 g iodine per 100 g polybutadiene homopolymer. For example, the at least one grafted polymer is a grafted polybutadiene homopolymer comprising at least one succinic anhydride group obtained by grafting maleic anhydride onto a polybutadiene homopolymer and having a Brookfield viscosity at 25°C in the range from 1 000 to 300 000 mPa·s, or an acid number in the range from 10 to 300 mg potassium hydroxide per g grafted polybutadiene homopolymer or an iodine number in the range from 100 to 1 000 g iodine per 100 g grafted polybutadiene homopolymer. Alternatively, the at least one grafted polymer is a grafted polybutadiene homopolymer comprising at least one succinic anhydride group obtained by grafting maleic anhydride onto a polybutadiene homopolymer and having a Brookfield viscosity at 25°C in the range from 1 000 to 300 000 mPa·s, and an acid number in the range from 10 to 300 mg potassium hydroxide per g grafted polybutadiene homopolymer and an iodine number in the range from 100 to 1 000 g iodine per 100 g grafted polybutadiene homopolymer.

Alternatively, the composition comprises the at least one calcium carbonate-comprising material and the at least one grafted polymer and/or the salty reaction products thereof as physical mixture.

However, this embodiment does not exclude that at least a part of the at least one grafted polymer and/or the salty reaction products thereof is/are present on the surface of the at least one calcium carbonate-comprising material in form of a treatment layer. In this case, the composition comprises the at least one calcium carbonate-comprising material and the at least one grafted polymer and/or the salty reaction products thereof as physical mixture and in that the at least one grafted polymer and/or the salty reaction products thereof are present on the surface of the at least one calcium carbonate-comprising material in form of a treatment layer,

In one embodiment, the at least one calcium carbonate-comprising material may be further surface treated with a further surface-treatment agent differing from the at least one grafted polymer.

For example, the at least one further surface-treatment agent may be selected from the group consisting of
I) a phosphoric acid ester blend of one or more phosphoric acid mono ester and/or salts thereof and/or one or more phosphoric acid di-ester and/or salts thereof, and/or
II) at least one saturated or unsaturated aliphatic linear or branched carboxylic acid and/or salts thereof, preferably at least one aliphatic carboxylic acid having a total amount of carbon atoms from C4 to C24 and/or a salt thereof, more preferably at least one aliphatic carboxylic acid having a total amount of carbon atoms from C12 to C20 and/or a salt thereof, most preferably at least one aliphatic carboxylic acid having a total amount of carbon atoms from C16 to C18 and/or a salt thereof and/or
III) at least one mono-substituted succinic anhydride consisting of succinic anhydride mono-substituted with a group selected from a linear, branched, aliphatic and cyclic group having a total amount of carbon atoms from at least C2 to C30 in the substituent and/or salts thereof, and/or
IV) at least one polydialkylsiloxane, and/or
V) mixtures of one or more materials according to I) to IV).

According to one embodiment of the present invention, the further surface-treatment agent is a phosphoric acid ester blend of one or more phosphoric acid mono-ester and/or salts thereof and/or one or more phosphoric acid di-ester and/or salts thereof.

In one embodiment of the present invention, the one or more phosphoric acid mono-ester consists of an o-phosphoric acid molecule esterified with one alcohol selected from saturated, branched or linear, aliphatic or aromatic alcohols having a total amount of carbon atoms from C6 to C30 in the alcohol substituent. For example, the one or more phosphoric acid mono-ester consists of an o-phosphoric acid molecule esterified with one alcohol selected from saturated, branched or linear, aliphatic or aromatic alcohols having a total amount of carbon atoms from C8 to C22, more preferably from C8 to C20 and most preferably from C8 to C18 in the alcohol substituent.

Alkyl esters of phosphoric acid are well known in the industry especially as surfactants, lubricants and antistatic agents (Die Tenside; Kosswig und Stache, Carl Hanser Verlag München, 1993).

The synthesis of alkyl esters of phosphoric acid by different methods and the surface treatment of minerals with alkyl esters of phosphoric acid are well known by the skilled man, e.g. from Pesticide Formulations and Application Systems: 17th Volume; Collins HM, Hall FR, Hopkinson M, STP1268; Published: 1996, US 3,897,519 A, US 4,921,990 A, US 4,350,645 A, US 6,710,199 B2, US 4,126,650 A, US 5,554,781 A, EP 1092000 B1 and WO 2008/023076 A1.

In one embodiment of the present invention, the one or more phosphoric acid mono-ester consists of an o-phosphoric acid molecule esterified with one alcohol selected from saturated and linear or branched and aliphatic alcohols having a total amount of carbon atoms from C₆ to C₃₀ in the alcohol substituent. For example, the one or more phosphoric acid mono-ester consists of an o-phosphoric acid molecule esterified with one alcohol selected from saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid mono-ester consists of an o-phosphoric acid molecule esterified with one alcohol selected from saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid mono-ester consists of an o-phosphoric acid molecule esterified with one alcohol selected from saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid mono-ester is selected from the group comprising hexyl phosphoric acid mono-ester, heptyl phosphoric acid mono-ester, octyl phosphoric acid mono-ester, 2-ethylhexyl phosphoric acid mono-ester, nonyl phosphoric acid mono-ester, decyl phosphoric acid mono-ester, undecyl phosphoric acid mono-ester, dodecyl phosphoric acid mono-ester, tetradecyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof.

For example, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof. In one embodiment of the present invention, the one or more phosphoric acid mono-ester is 2-octyl-1-dodecylphosphoric acid mono-ester.

It is appreciated that the expression "one or more" phosphoric acid di-ester means that one or more kinds of phosphoric acid di-ester may be present in the treatment layer of the surface-treated material product and/or the phosphoric acid ester blend.

Accordingly, it should be noted that the one or more phosphoric acid di-ester may be one kind of phosphoric acid di-ester. Alternatively, the one or more phosphoric acid di-ester may be a mixture of two or more kinds of phosphoric acid di-ester. For example, the one or more phosphoric acid di-ester may be a mixture of two or three kinds of phosphoric acid di-ester, like two kinds of phosphoric acid di-ester.

In one embodiment of the present invention, the one or more phosphoric acid di-ester consists of an o-phosphoric acid molecule esterified with two alcohols selected from saturated, branched or linear, aliphatic or aromatic alcohols having a total amount of carbon atoms from C6 to C30 in the alcohol substituent. For example, the one or more phosphoric acid di-ester consists of an o-phosphoric acid molecule esterified with two fatty alcohols selected from saturated, branched or linear, aliphatic or aromatic alcohols having a total amount of carbon atoms from C8 to C22, more preferably from C8 to C20 and most preferably from C8 to C18 in the alcohol substituent.

It is appreciated that the two alcohols used for esterifying the phosphoric acid may be independently selected from the same or different saturated, branched or linear, aliphatic or aromatic alcohols having a total amount of carbon atoms from C6 to C30 in the alcohol substituent. In other words, the one or more phosphoric acid di-ester may comprise two substituents being derived from the same alcohols or the phosphoric acid di-ester molecule may comprise two substituents being derived from different alcohols.

In one embodiment of the present invention, the one or more phosphoric acid di-ester consists of an o-phosphoric acid molecule esterified with two alcohols selected from the same or different, saturated and linear or branched and aliphatic alcohols having a total amount of carbon atoms from C6 to C30 in the alcohol substituent. For example, the one or more phosphoric acid di-ester consists of an o-phosphoric acid molecule esterified with two alcohols selected from the same or different, saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid di-ester consists of an o-phosphoric acid molecule esterified with two alcohols selected from the same or different, saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid di-ester consists of an o-phosphoric acid molecule esterified with two alcohols selected from the same or different, saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid di-ester is selected from the group comprising hexyl phosphoric acid di-ester, heptyl phosphoric acid di-ester, octyl phosphoric acid di-ester, 2-ethylhexyl phosphoric acid di-ester, nonyl phosphoric acid di-ester, decyl phosphoric acid di-ester, undecyl phosphoric acid di-ester, dodecyl phosphoric acid di-ester, tetradecyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

For example, the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof. In one embodiment of the present invention, the one or more phosphoric acid di-ester is 2-octyl-1-dodecylphosphoric acid di-ester.

In one embodiment of the present invention, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof and the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

According to another embodiment of the present invention, the further surface-treatment agent is at least one saturated or unsaturated aliphatic linear or branched carboxylic acid and/or salts thereof preferably at least one aliphatic carboxylic acid having a total amount of carbon atoms from C4 to C24 and/or a salt thereof, more preferably at least one aliphatic carboxylic acid having a total amount of carbon atoms from C12 to C20 and/or a salt thereof, most preferably at least one aliphatic carboxylic acid having a total amount of carbon atoms from C16 to C18 and/or a salt thereof.

The carboxylic acid in the meaning of the present invention may be selected from one or more linear chain, branched chain, saturated, or unsaturated and/or alicyclic carboxylic acids. Preferably, the aliphatic carboxylic acid is a monocarboxylic acid, i.e. the aliphatic carboxylic acid is characterized in that a single carboxyl group is present. Said carboxyl group is placed at the end of the carbon skeleton.

In one embodiment of the present invention, the aliphatic linear or branched carboxylic acid and/or salt thereof is selected from saturated unbranched carboxylic acids, preferably selected from the group of carboxylic acids consisting of pentanoic acid, hexanoic acid, heptanoic acid, octanoic acid, nonanoic acid, decanoic acid, undecanoic acid, lauric acid, tridecanoic acid, myristic acid, pentadecanoic acid, palmitic acid, heptadecanoic acid, stearic acid, nonadecanoic acid, arachidic acid, heneicosylic acid, behenic acid, tricosylic acid, lignoceric acid, their salts, their anhydrides and mixtures thereof.

In another embodiment of the present invention, the aliphatic linear or branched carboxylic acid and/or salt thereof is selected from the group consisting of octanoic acid, decanoic acid, lauric acid, myristic acid, palmitic acid, stearic acid, arachidic acid and mixtures thereof. Preferably, the aliphatic carboxylic acid is selected from the group consisting of myristic acid, palmitic acid, stearic acid, their salts, their anhydrides and mixtures thereof.

Preferably, the aliphatic carboxylic acid and/or a salt or anhydride thereof is stearic acid and/or a stearic acid salt or stearic anhydride.

Alternatively, the unsaturated aliphatic linear or branched carboxylic acid is preferably selected from the group consisting of myristoleic acid, palmitoleic acid, sapienic acid, oleic acid, elaidic acid, vaccenic acid, linoleic acid, α-linolenic acid, eicosapentaenoic acid, docosahexaenoic acid and mixtures thereof. More preferably, the unsaturated aliphatic linear or branched carboxylic acid selected from the group consisting of myristoleic acid, palmitoleic acid, sapienic acid, oleic acid, elaidic acid, vaccenic acid, linoleic acid, α-linolenic acid and mixtures thereof. Most preferably, the unsaturated aliphatic linear or branched carboxylic acid is oleic acid and/or linoleic acid, preferably oleic acid or linoleic acid, most preferably linoleic acid.

Additionally or alternatively, the surface treatment agent is a salt of an unsaturated aliphatic linear or branched carboxylic acid.

The term "salt of an unsaturated aliphatic linear or branched carboxylic acid" refers to an unsaturated fatty acid, wherein the active acid group is partially or completely neutralized. The term "partially neutralized" unsaturated aliphatic linear or branched carboxylic acid refers to a degree of neutralization of the active acid groups in the range from 40 and 95 mole-% preferably from 50 to 95 mole-%, more preferably from 60 to 95 mole-% and most preferably from 70 to 95 mole-%. The term "completely neutralized" unsaturated aliphatic linear or branched carboxylic acid refers to a degree of neutralization of the active acid groups of > 95 mole-%, preferably of > 99 mole-%, more preferably of > 99.8 mole-% and most preferably of 100 mole-%. Preferably, the active acid groups are partially or completely neutralized.

The salt of unsaturated aliphatic linear or branched carboxylic acid acid is preferably a compound selected from the group consisting of sodium, potassium, calcium, magnesium, lithium, strontium, primary amine, secondary amine, tertiary amine and/or ammonium salts thereof, whereby the amine salts are linear or cyclic. For example, the unsaturated aliphatic linear or branched carboxylic acid is a salt of oleic acid and/or linoleic acid, preferably oleic acid or linoleic acid, most preferably linoleic acid.

According to another embodiment of the present invention, the further surface-treatment agent is at least one mono-substituted succinic anhydride consisting of succinic anhydride mono-substituted with a group selected from a linear, branched, aliphatic and cyclic group having a total amount of carbon atoms from at least C2 to C30 in the substituent and/or salts thereof. Preferably. the further surface-treatment agent is at least one mono-substituted succinic anhydride consisting of succinic anhydride mono-substituted with a group being a linear aliphatic group having a total amount of carbon atoms from at least C2 to C30 in the substituent and/or salts thereof. Additionally or alternatively, the further surface-treatment agent is at least one mono-substituted succinic anhydride consisting of succinic anhydride mono-substituted with a group being a branched aliphatic group having a total amount of carbon atoms from at least C3 to C30 in the substituent and/or salts thereof. Additionally or alternatively, the further surface-treatment agent is at least one mono-substituted succinic anhydride consisting of succinic anhydride mono-substituted with a group being a cyclic aliphatic group having a total amount of carbon atoms from at least C5 to C30 in the substituent and/or salts thereof.

Accordingly, it should be noted that the at least one mono-substituted succinic anhydride may be one kind of mono-substituted succinic anhydride. Alternatively, the at least one mono-substituted succinic anhydride may be a mixture of two or more kinds of mono-substituted succinic anhydride. For example, the at least one mono-substituted succinic anhydride may be a mixture of two or three kinds of mono-substituted succinic anhydride, like two kinds of mono-substituted succinic anhydride.

In one embodiment of the present invention, the at least one mono-substituted succinic anhydride is one kind of mono-substituted succinic anhydride.

It is appreciated that the at least one mono-substituted succinic anhydride represents a surface treatment agent and consists of succinic anhydride mono-substituted with a group selected from any linear, branched, aliphatic, and cyclic group having a total amount of carbon atoms from C2 to C30 in the substituent.

In one embodiment of the present invention, the at least one mono-substituted succinic anhydride consists of succinic anhydride mono-substituted with a group selected from a linear, branched, aliphatic, and cyclic group having a total amount of carbon atoms from C3 to C20 in the substituent. For example, the at least one mono-substituted succinic anhydride consists of succinic anhydride mono-substituted with a group selected from a linear, branched, aliphatic, and cyclic group having a total amount of carbon atoms from C4 to C18 in the substituent. Preferably, the further surface-treatment agent is at least one mono-substituted succinic anhydride consisting of succinic anhydride mono-substituted with a group being a linear aliphatic group having a total amount of carbon atoms from C3 to C20, more preferably from C4 to C18, in the substituent and/or salts thereof. Additionally or alternatively, the further surface-treatment agent is at least one mono-substituted succinic anhydride consisting of succinic anhydride mono-substituted with a group being a branched aliphatic group having a total amount of carbon atoms from C3 to C20, more preferably from C4 to C18, in the substituent and/or salts thereof. Additionally or alternatively, the further surface-treatment agent is at least one mono-substituted succinic anhydride consisting of succinic anhydride mono-substituted with a group being a cyclic aliphatic group having a total amount of carbon atoms from C5 to C20, more preferably from C5 to C18in the substituent and/or salts thereof.

In one embodiment of the present invention, the at least one mono-substituted succinic anhydride consists of succinic anhydride mono-substituted with one group being a linear and aliphatic group having a total amount of carbon atoms from C2 to C30, preferably from C3 to C20 and most preferably from C4 to C18 in the substituent. Additionally or alternatively, the at least one mono-substituted succinic anhydride consists of succinic anhydride mono-substituted with one group being a branched and aliphatic group having a total amount of carbon atoms from C3 to C30, preferably from C3 to C20 and most preferably from C4 to C18 in the substituent.

Thus, it is preferred that the at least one mono-substituted succinic anhydride consists of succinic anhydride mono-substituted with one group being a linear or branched, alkyl group having a total amount of carbon atoms from C2 to C30, preferably from C3 to C20 and most preferably from C4 to C18 in the substituent.

For example, the at least one mono-substituted succinic anhydride consists of succinic anhydride mono-substituted with one group being a linear alkyl group having a total amount of carbon atoms from C2 to C30, preferably from C3 to C20 and most preferably from C4 to C18 in the substituent. Additionally or alternatively, the at least one mono-substituted succinic anhydride consists of succinic anhydride mono-substituted with one group being a branched alkyl group having a total amount of carbon atoms from C3 to C30, preferably from C3 to C20 and most preferably from C4 to C18 in the substituent.

In one embodiment of the present invention, the at least one mono-substituted succinic anhydride is at least one linear or branched alkyl mono-substituted succinic anhydride. For example, the at least one alkyl mono-substituted succinic anhydride is selected from the group comprising ethylsuccinic anhydride, propylsuccinic anhydride, butylsuccinic anhydride, triisobutyl succinic anhydride, pentylsuccinic anhydride, hexylsuccinic anhydride, heptylsuccinic anhydride, octylsuccinic anhydride, nonylsuccinic anhydride, decyl succinic anhydride, dodecyl succinic anhydride, hexadecanyl succinic anhydride, octadecanyl succinic anhydride, and mixtures thereof.

Accordingly, it is appreciated that, e.g., the term "butylsuccinic anhydride" comprises linear and branched butylsuccinic anhydride(s). One specific example of linear butylsuccinic anhydride(s) is n-butylsuccinic anhydride. Specific examples of branched butylsuccinic anhydride(s) are isobutylsuccinic anhydride, sec-butylsuccinic anhydride and/or tert-butylsuccinic anhydride.

Furthermore, it is appreciated that, e.g., the term "hexadecanyl succinic anhydride" comprises linear and branched hexadecanyl succinic anhydride(s). One specific example of linear hexadecanyl succinic anhydride(s) is n-hexadecanyl succinic anhydride. Specific examples of branched hexadecanyl succinic anhydride(s) are 14-methylpentadecanyl succinic anhydride, 13-methylpentadecanyl succinic anhydride, 12-methylpentadecanyl succinic anhydride, 11-methylpentadecanyl succinic anhydride, 10-methylpentadecanyl succinic anhydride, 9-methylpentadecanyl succinic anhydride, 8-methylpentadecanyl succinic anhydride, 7-methylpentadecanyl succinic anhydride, 6-methylpentadecanyl succinic anhydride, 5-methylpentadecanyl succinic anhydride, 4-methylpentadecanyl succinic anhydride, 3-methylpentadecanyl succinic anhydride, 2-methylpentadecanyl succinic anhydride, 1-methylpentadecanyl succinic anhydride, 13-ethylbutadecanyl succinic anhydride, 12-ethylbutadecanyl succinic anhydride, 11-ethylbutadecanyl succinic anhydride, 10-ethylbutadecanyl succinic anhydride, 9-ethylbutadecanyl succinic anhydride, 8-ethylbutadecanyl succinic anhydride, 7-ethylbutadecanyl succinic anhydride, 6-ethylbutadecanyl succinic anhydride, 5-ethylbutadecanyl succinic anhydride, 4-ethylbutadecanyl succinic anhydride, 3-ethylbutadecanyl succinic anhydride, 2-ethylbutadecanyl succinic anhydride, 1-ethylbutadecanyl succinic anhydride, 2-butyldodecanyl succinic anhydride, 1-hexyldecanyl succinic anhydride, 1-hexyl-2-decanyl succinic anhydride, 2-hexyldecanyl succinic anhydride, 6,12-dimethylbutadecanyl succinic anhydride, 2,2-diethyldodecanyl succinic anhydride, 4,8,12-trimethyltridecanyl succinic anhydride, 2,2,4,6,8-pentamethylundecanyl succinic anhydride, 2-ethyl-4-methyl-2-(2-methylpentyl)-heptyl succinic anhydride and/or 2-ethyl-4,6-dimethyl-2-propylnonyl succinic anhydride.

Furthermore, it is appreciated that e.g. the term "octadecanyl succinic anhydride" comprises linear and branched octadecanyl succinic anhydride(s). One specific example of linear octadecanyl succinic anhydride(s) is n-octadecanyl succinic anhydride. Specific examples of branched hexadecanyl succinic anhydride(s) are 16-methylheptadecanyl succinic anhydride, 15-methylheptadecanyl succinic anhydride, 14-methylheptadecanyl succinic anhydride, 13-methylheptadecanyl succinic anhydride, 12-methylheptadecanyl succinic anhydride, 11-methylheptadecanyl succinic anhydride, 10-methylheptadecanyl succinic anhydride, 9-methylheptadecanyl succinic anhydride, 8-methylheptadecanyl succinic anhydride, 7-methylheptadecanyl succinic anhydride, 6-methylheptadecanyl succinic anhydride, 5-methylheptadecanyl succinic anhydride, 4-methylheptadecanyl succinic anhydride, 3-methylheptadecanyl succinic anhydride, 2-methylheptadecanyl succinic anhydride, 1-methylheptadecanyl succinic anhydride, 14-ethylhexadecanyl succinic anhydride, 13-ethylhexadecanyl succinic anhydride, 12-ethylhexadecanyl succinic anhydride, 11-ethylhexadecanyl succinic anhydride, 10-ethylhexadecanyl succinic anhydride, 9-ethylhexadecanyl succinic anhydride, 8-ethylhexadecanyl succinic anhydride, 7-ethylhexadecanyl succinic anhydride, 6-ethylhexadecanyl succinic anhydride, 5-ethylhexadecanyl succinic anhydride, 4-ethylhexadecanyl succinic anhydride, 3-ethylhexadecanyl succinic anhydride, 2-ethylhexadecanyl succinic anhydride, 1-ethylhexadecanyl succinic anhydride, 2-hexyldodecanyl succinic anhydride, 2-heptylundecanyl succinic anhydride, iso-octadecanyl succinic anhydride and/or 1-octyl-2-decanyl succinic anhydride.

In one embodiment of the present invention, the at least one alkyl mono-substituted succinic anhydride is selected from the group comprising butylsuccinic anhydride, hexylsuccinic anhydride, heptylsuccinic anhydride, octylsuccinic anhydride, hexadecanyl succinic anhydride, octadecanyl succinic anhydride, and mixtures thereof.

In one embodiment of the present invention, the at least one mono-substituted succinic anhydride is one kind of alkyl mono-substituted succinic anhydride. For example, the one alkyl mono-substituted succinic anhydride is butylsuccinic anhydride. Alternatively, the one alkyl mono-substituted succinic anhydride is hexylsuccinic anhydride. Alternatively, the one alkyl mono-substituted succinic anhydride is heptylsuccinic anhydride or octylsuccinic anhydride. Alternatively, the one alkyl mono-substituted succinic anhydride is hexadecanyl succinic anhydride. For example, the one alkyl mono-substituted succinic anhydride is linear hexadecanyl succinic anhydride such as n-hexadecanyl succinic anhydride or branched hexadecanyl succinic anhydride such as 1-hexyl-2-decanyl succinic anhydride. Alternatively, the one alkyl mono-substituted succinic anhydride is octadecanyl succinic anhydride. For example, the one alkyl mono-substituted succinic anhydride is linear octadecanyl succinic anhydride such as n-octadecanyl succinic anhydride or branched octadecanyl succinic anhydride such as iso-octadecanyl succinic anhydride or 1-octyl-2-decanyl succinic anhydride.

In one embodiment of the present invention, the one alkyl mono-substituted succinic anhydride is butylsuccinic anhydride such as n-butylsuccinic anhydride.

In one embodiment of the present invention, the at least one mono-substituted succinic anhydride is a mixture of two or more kinds of alkyl mono-substituted succinic anhydrides. For example, the at least one mono-substituted succinic anhydride is a mixture of two or three kinds of alkyl mono-substituted succinic anhydrides.

According to another embodiment of the present invention, the further surface-treatment agent is at least one polydialkylsiloxane.

Preferred polydialkylsiloxanes are described e.g. in US 2004/0097616 A1. Most preferred are polydialkylsiloxanes selected from the group consisting of polydimethylsiloxane, preferably dimethicone, polydiethylsiloxane and polymethylphenylsiloxane and/or mixtures thereof.

For example, the at least one polydialkylsiloxane is preferably a polydimethylsiloxane (PDMS).

The composition of the present invention is preferably formed in that the at least one calcium carbonate-comprising material and the at least one grafted polymer are provided as physical mixture and/or in that the at least one calcium carbonate-comprising material is contacted with the at least one grafted polymer such that a treatment layer comprising the at least one grafted polymer and/or salty reaction products thereof is formed on the surface of the at least one calcium carbonate-comprising material. For example, the composition of the present invention is formed in that the at least one calcium carbonate-comprising material and the at least one grafted polymer are provided as physical mixture or in that the at least one calcium carbonate-comprising material is contacted with the at least one grafted polymer such that a treatment layer comprising the at least one grafted polymer and/or salty reaction products thereof is formed on the surface of the at least one calcium carbonate-comprising material. Preferably, the composition of the present invention is formed in that the at least one calcium carbonate-comprising material is contacted with the at least one grafted polymer such that a treatment layer comprising the at least one grafted polymer and/or salty reaction products thereof is formed on the surface of the at least one calcium carbonate-comprising material. Thus, the composition of the present invention is preferably a surface-treated calcium carbonate-comprising material comprising a treatment layer comprising the at least one grafted polymer and/or salty reaction products thereof on the surface of the at least one calcium carbonate-comprising material.

In a further embodiment, the composition of the present invention is formed in that the at least one calcium carbonate-comprising material, the at least one grafted polymer and the further surface-treatment agent are provided as physical mixture and/or in that the at least one calcium carbonate-comprising material is contacted with the at least one grafted polymer and the further surface-treatment agent such that a treatment layer comprising the at least one grafted polymer and/or salty reaction products thereof and the further surface-treatment agent and/or salty reaction products thereof is formed on the surface of the at least one calcium carbonate-comprising material. For example, the composition of the present invention is formed in that the at least one calcium carbonate-comprising material, the at least one grafted polymer and the further surface-treatment agent are provided as physical mixture or in that the at least one calcium carbonate-comprising material is contacted with the at least one grafted polymer and the further surface-treatment agent such that a treatment layer comprising the at least one grafted polymer and/or salty reaction products thereof and the further surface-treatment agent and/or salty reaction products thereof is formed on the surface of the at least one calcium carbonate-comprising material. Preferably, the composition of the present invention is formed in that the at least one calcium carbonate-comprising material is contacted with the at least one grafted polymer and the further surface-treatment agent such that a treatment layer comprising the at least one grafted polymer and/or salty reaction products thereof and the further surface-treatment agent and/or salty reaction products thereof is formed on the surface of the at least one calcium carbonate-comprising material. In this embodiment, the composition of the present invention is preferably a surface-treated calcium carbonate-comprising material comprising a treatment layer comprising the at least one grafted polymer and/or salty reaction products thereof and the further surface-treatment agent and/or salty reaction products thereof on the surface of the at least one calcium carbonate-comprising material.

It is appreciated that the treatment layer on the surface of the calcium carbonate-comprising material preferably comprises the at least one grafted polymer comprising at least one succinic anhydride group obtained by grafting maleic anhydride onto a homo- or copolymer comprising butadiene units and optionally styrene units and/or salty reaction products thereof. That is, a chemical reaction may take place between the calcium carbonate-comprising material and the at least one grafted polymer. In other words, the treatment layer formed on the surface of the calcium carbonate-comprising material may comprise the at least one grafted polymer and/or salty reaction products thereof.

The term "salty reaction products" of the at least one grafted polymer refers to products obtained by contacting the calcium carbonate-comprising material with the at least one grafted polymer. Said reaction products are formed between at least a part of the applied at least one grafted polymer and reactive molecules located at the surface of the calcium carbonate-comprising material. The same applies to the further surface-treatment agent, if present.

Methods for the preparation of compositions as described herein, and especially the surface treatment of fillers, are known to the skilled person, and are described, for example, in EP 3 192 837 A1, EP 2 770 017 A1, and WO 2016/023937. It is to be noted that the composition of the present invention is obtainable by a process comprising at least the following steps:
a) providing a calcium carbonate-comprising material selected from among ground calcium carbonate (GCC), precipitated calcium carbonate (PCC)and mixtures thereof;
b) providing at least one grafted polymer comprising at least one succinic anhydride group obtained by grafting maleic anhydride onto a homo- or copolymer comprising butadiene units and optionally styrene units in an amount from 0.1 to 8 mg/m², based on the total weight of the calcium carbonate-comprising material,
c) optionally providing at least one further surface-treatment agent as defined herein,
d) optionally heating the at least one grafted polymer, and
e) contacting the calcium carbonate-comprising material under mixing, in one or more steps, with the at least one grafted polymer,
f) if present, heating the at least one further surface-treatment agent to its melting point or above such that a molten surface-treatment agent is obtained and contacting the calcium carbonate-comprising material under mixing, in one or more steps, with the molten surface-treatment agent simultaneously or subsequently to the at least one grafted polymer.

It is appreciated that the calcium carbonate-comprising material in step a) is preferably provided in dry form. Additionally or alternatively, the at least one grafted polymer material in step b) is preferably provided in dry form. Preferably, the calcium carbonate-comprising material in step a) is provided in dry form and the at least one grafted polymer material in step b) is provided in dry form. In a preferred embodiment, the composition is thus prepared in a dry process. With respect to the process, it is to be noted that the wording "dry form" means that the calcium carbonate-comprising material in step a) and/or the at least one grafted polymer material in step b) is/are provided without the use of solvent(s) such as water.Alternatively, the calcium carbonate-comprising material in step a) is preferably provided in form of an aqueous suspension having solids content from 1 to 78 wt.-%, preferably from 5 to 50 wt.-%, based on the total weight of the suspension. Additionally or alternatively, the at least one grafted polymer material in step b) is preferably provided in dry form or in form of a solution. Preferably, the calcium carbonate-comprising material in step a) is provided in form of an aqueous suspension having solids content from 1 to 78 wt.-%, based on the total weight of the suspension, and the at least one grafted polymer material in step b) is provided in dry form. In a preferred embodiment, the composition is thus prepared in a wet process.

It is appreciated that the at least one grafted polymer may be in solid, highly viscous or liquid state. Typically, the at least one grafted polymer is in highly viscous or liquid state. It is preferred that the at least one grafted polymer is provided in liquid state in process step e). Thus, the at least one grafted polymer may be optionally heated to provide the at least one grafted polymer in liquid stated, i.e. in a less viscous state. In one embodiment, the process thus includes a step of heating the at least one grafted polymer. Such a heating step d) is preferably carried out in case the at least one grafted polymer is solid or highly viscous. However, even if the at least one grafted polymer in step b) is in liquid state it may be favourable to carry out heating step d) in order to speed up and increase the reaction.

In general, step e) is carried out at a temperature from 5 to 200°C, preferably from 20 to 150°C, and most preferably from 40 to 150°C, e.g. from 80 to 150°C. If the process comprises step d) of heating the at least one grafted polymer, step d) and step e) are preferably carried out at a temperature from 40 to 150°C, e.g. from 80 to 150°C. It is appreciated that the temperature in optional step d) and step e) are adjusted such that the at least one grafted polymer is in a liquid state but without thermally decomposing the at least one grafted polymer.

If step d) is present, step d) and step e) can be carried out simultaneously or separately. If step d) and step e) are carried out separately, step d) is preferably carried out after step e). If step d) is carried out after step e), the at least one grafted polymer of step b) is preferably added in dry form and heated (i.e. the at least one grafted polymer is made less viscous) once in contact with the calcium carbonate-comprising material of step a). It is also possible that the calcium carbonate-comprising material is contacted under mixing, in one or more steps, with the at least one grafted polymer and subsequently heated.

It is preferred that, if present, step d) and step e) are carried out simultaneously, preferably in the same vessel, i.e. in that the mixture of the at least one calcium carbonate-comprising material and the at least one grafted polymer is heated to a temperature from 5 to 200°C, preferably from 20 to 150°C, and most preferably from 40 to 150°C, e.g. from 80 to 150°C.

Step e) and optional step f) are carried out under mixing. It is appreciated that the mixing can be carried out by any method or in any vessel known to the skilled person resulting in a homogeneous composition. For example, step e) and optional step f) are carried out in a high speed mixer or pin mill.

If the process comprises a step of contacting the calcium carbonate-comprising material with the further surface-treatment agent, step f) is carried out at a temperature of at least 2°C, preferably at least 5°C and most preferably at least 10°C, above the melting point of the further surface treatment agent, preferably at a temperature from 5 to 200°C, e.g. from 20 to 150°C. Such temperature results in a molten surface treatment agent. It is appreciated that the temperature in step f) is adjusted such that the further surface treatment agent is in a molten state but without thermally decomposing the further surface treatment agent.

Such a process, especially if it is a dry process, results in a favourable composition of the present invention in that the composition obtained has an advantageous residual total moisture content as well as moisture pick-up susceptibility. It is appreciated that a low residual total moisture content results in favourable mechanical characteristics of the polyester when the composition of the present invention is incorporated therein.

Preferably, the composition has a residual total moisture content of ≤ 2 wt.-%, based on the total dry weight of the at least one calcium carbonate-comprising material, more preferably ≤ 1.5 wt.-%, even more preferably ≤ 1.2 wt.-%, and most preferably ≤ 0.8 wt.-%. In one embodiment, the composition has a residual moisture content of from 0.001 wt.-% to 2 wt.-%, based on the total dry weight of the at least one calcium carbonate-comprising material, preferably from 0.001 wt.-% to 1.5 wt.-%, more preferably from 0.002 wt.-% to 1.2 wt.-%, and most preferably from 0.005 wt.-% to 0.8 wt.-%. This is especially applicable in case the calcium carbonate-comprising material is ground calcium carbonate (GCC). Additionally or alternatively, the composition has a moisture pick-up susceptibility of from 0.001 wt.-% to 2 wt.-%, based on the total dry weight of the at least one calcium carbonate-comprising material, preferably from 0.001 wt.-% to 1.5 wt.-%, more preferably from 0.002 wt.-% to 1.2 wt.-%, and most preferably from 0.005 wt.-% to 0.8 wt.-%.

In a preferred embodiment, the composition is formed from the calcium carbonate-comprising material and the at least one grafted polymer comprising at least one succinic anhydride group obtained by grafting maleic anhydride onto a homo- or copolymer comprising butadiene units and optionally styrene units only.

In this embodiment, the present process comprises at least the following steps:
a) providing a calcium carbonate-comprising material selected from among ground calcium carbonate (GCC), precipitated calcium carbonate (PCC), and mixtures thereof;
b) providing at least one grafted polymer comprising at least one succinic anhydride group obtained by grafting maleic anhydride onto a homo- or copolymer comprising butadiene units and optionally styrene units and/or salty reaction products thereof in an amount from 0.1 to 8 mg/m², based on the total weight of the calcium carbonate-comprising material,
c) optionally heating the at least one grafted polymer, and
d) contacting the calcium carbonate-comprising material under mixing, in one or more steps, with the at least one grafted polymer.

In this embodiment, the treatment layer on at least a part of the surface of the at least one calcium carbonate-comprising material is formed upon contacting the calcium carbonate-comprising material with the grafted polymer only. Thus, the treatment layer on at least a part of the surface of the at least one calcium carbonate-comprising material comprises, preferably consists of, the at least one grafted polymer comprising at least one succinic anhydride group obtained by grafting maleic anhydride onto a homo- or copolymer comprising butadiene units and optionally styrene units and/or salty reaction products thereof.

It is appreciated that optional step d) and step e) are preferably carried out at a temperature from 5 to 200°C, more preferably from 20 to 150°C, and most preferably from 40 to 150°C, e.g. from 80 to 150°C.

In another preferred embodiment, the composition is formed from the calcium carbonate-comprising material and the at least one grafted polymer comprising at least one succinic anhydride group obtained by grafting maleic anhydride onto a homo- or copolymer comprising butadiene units and optionally styrene units only and the further surface-treatment agent.

In this embodiment, the present process comprises at least the following steps:
a) providing a calcium carbonate-comprising material selected from among ground calcium carbonate (GCC), precipitated calcium carbonate (PCC), and mixtures thereof;
b) providing at least one grafted polymer comprising at least one succinic anhydride group obtained by grafting maleic anhydride onto a homo- or copolymer comprising butadiene units and optionally styrene units and/or salty reaction products thereof in an amount from 0.1 to 8 mg/m², based on the total weight of the calcium carbonate-comprising material,
c) providing at least one further surface-treatment agent,
d) optionally heating the at least one grafted polymer, and
e) contacting the calcium carbonate-comprising material under mixing, in one or more steps, with the at least one grafted polymer,
f) heating the at least one further surface-treatment agent to its melting point or above such that a molten surface-treatment agent is obtained and contacting the calcium carbonate-comprising material under mixing, in one or more steps, with the molten surface-treatment agent simultaneously or subsequently, preferably subsequently, to the at least one polymer.

If the surface-treatment composition comprises a further surface treatment agent, the at least one grafted polymer and the further surface-treatment agent may be provided as a mixture prior to contacting the calcium carbonate-comprising material. In this embodiment, the calcium carbonate-comprising material is contacted with the molten surface-treatment agent simultaneously to the at least one grafted polymer. Alternatively, the calcium carbonate-comprising material may be contacted with the at least one grafted polymer, and the further surface-treatment agent subsequently in any order. That is to say, the treatment layer on at least a part of the surface of the at least one calcium carbonate-comprising material is formed upon contacting the calcium carbonate-comprising material with the at least one grafted polymer and the molten further surface-treatment agent in subsequent steps. It is appreciated that the calcium carbonate-comprising material is contacted with the molten surface-treatment agent preferably before the contacting of the calcium carbonate-comprising material with the at least one grafted polymer. Thus, the treatment layer on at least a part of the surface of the at least one calcium carbonate-comprising material comprises, preferably consists of, the at least one grafted polymer comprising at least one succinic anhydride group obtained by grafting maleic anhydride onto a homo- or copolymer comprising butadiene units and optionally styrene units and/or salty reaction products thereof and the further surface-treatment agent and/or salty reaction products thereof.

In a preferred embodiment, process step e) and process step f) are carried out subsequently and the calcium carbonate-comprising material is first contacted with the molten surface-treatment agent followed by the at least one grafted polymer.

In an alternative embodiment, process step e) and process step f) are carried out subsequently and the calcium carbonate-comprising material is first contacted with the molten grafted polymer followed by the molten surface-treatment agent.

It is appreciated that step f) is preferably carried out at a temperature of at least 2°C, preferably at least 5°C and most preferably at least 10°C above the melting point of the further surface treatment agent(s). For example, step f) is carried out at a temperature of 2°C to 30°C, preferably of 5°C to 25°C, and most preferably 10°C to 20°C, above the melting point of the further surface treatment agent(s).

In one embodiment, optional step d), step e) and step f) are carried out at a temperature from 5 to 200°C, preferably from 20 to 150°C, and most preferably from 40 to 150°C, e.g. from 80 to 150°C.

### Products

Another aspect of the present invention refers to a polyester mixture comprising a polyester resin and from 3 to 82 wt.-%, based on the total weight of the mixture, of the composition as defined herein, wherein the composition is dispersed in the polyester resin.

It should be noted that the polyester resin may be one kind of polyester resin. Alternatively, the polyester resin may be a mixture of two or more kinds of polyester resins. For example, the polyester resin may be a mixture of two or three kinds of polyester resins, like two kinds of polyester resins.

In one embodiment of the present invention, the polyester resin comprises, preferably consists of, one kind of polyester resin.

In general, the term "polyester" means a polymer obtained by the condensation polymerization, at least in part, of a diol and a dicarboxylic acid. As the dicarboxylic acid, terephthalic acid, isophthalic acid, phthalic acid, naphthalenedicarboxylic acid, adipic acid, or sebacic acid can be used. As the diol, ethylene glycol, trimethylene glycol, tetramethylene glycol, or cyclohexanedimethanol can be used. The term "polyester" also refers to a polymer made from lactic acid or from ring opening polymerization of the lactide (cyclic ester) or polymers by biosynthesis such as enzymatic processes.

Additionally or alternatively, the polyester resinmay be a partially or fully biobased polyester resin, i.e. a polyester resin in which the monomers are derived from renewable biomass sources. Examples of monomers include those which can be produced by using bioderived compounds. For example, the monomers include but are not limited to ethylene glycol (EG), furandicarboxylic acid (FDCA), polyethylene furanoate (PEF), which can be produced by using fructose, and mixtures thereof. Further monomers which are suitable for preparing the biobased polyester are described in e.g. WO2014/100265 A1, which is thus herewith incorporated by reference.

Additionally or alternatively, the polyester resin is a PET recycling material such as PET bottle scrap from the PET recycling stream.

Thus, the polyester resin of the present invention preferably consists of one or more saturated polyester resins selected from the group comprising polylactic acid, polylactic acid-based polymer, aliphatic polyester such as polyhydroxyalkanoates, e.g. polyhydroxybutyrate, poly-3- hydroxybutyrate (P3HB), polyhydroxyvalerate, polyhydroxybutyrate-polyhydroxyvalerate copolymer, poly(3-hydroxybutyrate-co-3-hydroxyvalerate); polyethylene terephthalate (PET), polybutylene terephthalate (PBT), polybutyrate-adipate-terephthalate (PBAT), polyglycolide, poly(dioxanone) and mixtures thereof.

In one embodiment, the polyester resin of the present invention is selected from the group comprising polylactic acid, polylactic acid-based polymer and mixtures thereof. Preferably, the polyester resin of the present invention is polylactic acid.

In general, the polyester resin preferably has
i) a number average molecular weight Mn measured by gel permeation chromatography from 5 000 to 200 000 g/mol, preferably from 10 000 to 100 000 g/mol, and more preferably from 15000 to 80000 g/mol, and/or
ii) a specific gravity measured according to ASTM D782 from 0.5 to 5, preferably from 0.7 to 4, and more preferably from 1 to 3, and/or
iii) a glass transition temperature Tg measured by differential scanning calorimetry (DSC) in the range from 35 to 90°C, preferably from 40 to 70 °C, and more preferably from 45 to 70 °C.

For example, the polyester resin preferably has
i) a number average molecular weight Mn measured by gel permeation chromatography from 5 000 to 200 000 g/mol, preferably from 10 000 to 100 000 g/mol, and more preferably from 15000 to 80000 g/mol, or
ii) a specific gravity measured according to ASTM D782 from 0.5 to 5, preferably from 0.7 to 4, and more preferably from 1 to 3, or
iii) a glass transition temperature Tg measured by differential scanning calorimetry (DSC) in the range from 35 to 90°C, preferably from 40 to 70 °C, and more preferably from 45 to 70 °C.

Alternatively, the polyester resin has
i) a number average molecular weight Mn measured by gel permeation chromatography from 5 000 to 200 000 g/mol, preferably from 10 000 to 100 000 g/mol, and more preferably from 15000 to 80000 g/mol, and
ii) a specific gravity measured according to ASTM D782 from 0.5 to 5, preferably from 0.7 to 4, and more preferably from 1 to 3, and
iii) a glass transition temperature Tg measured by differential scanning calorimetry (DSC) in the range from 35 to 90°C, preferably from 40 to 70 °C, and more preferably from 45 to 70 °C.

The polylactic acid may be prepared in a well known manner and is commercially available from different manufacturers such as Cereplast Inc, Mitsui Chemicals Inc, Gehr GmbH or NatureWorks and many more.

There is no specific limitation on the molecular weight of the polylactic acid used in this invention. However, the number average molecular weight Mn measured by gel permeation chromatography from 5 000 to 200 000 g/mol, preferably from 10 000 to 100 000 g/mol, and more preferably from 15000 to 80000 g/mol. If the number average molecular weight is smaller than the aforementioned range, the mechanical strength (tensile strength, impact strength) of the polymer composition is too low. On the other hand, if the number average molecular weight is larger than the aforementioned range, the melt viscosity may be too high for carrying out the processing.

Additionally or alternatively, the polylactic acid has a melt flow rate MFR (210 °C, 2.16 kg) measured according to ISO 1133 of from 1.0 to 100.0 g/10 min, preferably of from 2.0 to 50.0 g/10 min and most preferably from 2.3 to 35.0 g/10 min.

Additionally or alternatively, the polylactic acid has a specific gravity measured according to ASTM D782 from 0.5 to 5, preferably from 0.7 to 4, and more preferably from 1 to 3, e.g. from 1 to 2.

Additionally or alternatively, the polylactic acid has a glass transition temperature Tg measured by differential scanning calorimetry (DSC) in the range from 35 to 90°C, preferably from 40 to 70 °C, and more preferably from 45 to 70 °C, e.g. from 50 to 65 °C.

Thus, the polylactic acid preferably has
i) a number average molecular weight Mn measured by gel permeation chromatography from 5 000 to 200 000 g/mol, preferably from 10 000 to 100 000 g/mol, and more preferably from 15000 to 80000 g/mol, and
ii) a specific gravity measured according to ASTM D782 from 0.5 to 5, preferably from 0.7 to 4, and more preferably from 1 to 3, e.g. from 1 to 2, and
iii) a glass transition temperature Tg measured by differential scanning calorimetry (DSC) in the range from 35 to 90°C, preferably from 40 to 70 °C, and more preferably from 45 to 70 °C, e.g. from 50 to 65 °C.

In one embodiment, the polylactic acid preferably has
i) a number average molecular weight Mn measured by gel permeation chromatography from 5 000 to 200 000 g/mol, preferably from 10 000 to 100 000 g/mol, and more preferably from 15000 to 80000 g/mol, and
ii) a specific gravity measured according to ASTM D782 from 0.5 to 5, preferably from 0.7 to 4, and more preferably from 1 to 3, e.g. from 1 to 2, and
iii) a glass transition temperature Tg measured by differential scanning calorimetry (DSC) in the range from 35 to 90°C, preferably from 40 to 70 °C, and more preferably from 45 to 70 °C, e.g. from 50 to 65 °C, and
iv) a melt flow rate MFR (210 °C, 2.16 kg) measured according to ISO 1133 of from 1.0 to 100.0 g/10 min, preferably of from 2.0 to 50.0 g/10 min and most preferably from 2.3 to 35.0 g/10 min.

In one embodiment, the polyester resin consists of polylactic acid. Preferably, the polyester resin consists of polylactic acid having from 1 to 10 wt.-%, more preferably between 4 to 6 wt.-% of D isomers, based on the total weight of the polylactic acid.

Examples of polylactic acid-based resins suitable for the instant polyester mixture include copolymers of lactic acid and blends of polylactic acids.

If the polylactic acid-based resin is a copolymer, the polylactic acid-based resin may comprise further copolymer components in addition to lactic acid. Examples of the further copolymer component include hydroxybutyric acid, 3-hydroxybutyric acid, hydroxyvaleric acid, 3-hydroxyvaleric acid and citric acid.

The polylactic acid-based resin preferably has a number average molecular weight Mn measured by gel permeation chromatography from 5 000 to 200 000 g/mol, preferably from 10 000 to 100 000 g/mol, and more preferably from 15000 to 80000 g/mol. Additionally or alternatively, the polylactic acid-based resin has a melt flow rate MFR (210 °C, 2.16 kg) measured according to ISO 1133 of from 1.0 to 100.0 g/10 min, preferably of from 2.0 to 50.0 g/10 min and most preferably from 2.3 to 35.0 g/10 min. Additionally or alternatively, the polylactic acid-based resin has a specific gravity measured according to ASTM D782 from 0.5 to 5, preferably from 0.7 to 4, and more preferably from 1 to 3. Additionally or alternatively, the polylactic acid-based resin has a glass transition temperature Tg measured by differential scanning calorimetry (DSC) in the range from 35 to 90°C, preferably from 40 to 70 °C, and more preferably from 45 to 70 °C.

In one embodiment of the present invention, the polyester resin consists of an aliphatic polyester.

For example, the aliphatic polyester is selected from polyhydroxybutyrate, poly-3-hydroxybutyrate (P3HB), polyhydroxyvalerate, polyhydroxybutyrate-polyhydroxyvalerate copolymer, poly(3- hydroxybutyrate-co-3-hydroxyvalerate), and mixtures thereof.

The aliphatic polyester preferably has a melt flow rate MFR measured according to ISO 1133 of from 0.5 to 100.0 g/10 min, preferably of from 2.0 to 50.0 g/10 min and most preferably from 2.3 to 35.0 g/10 min. The adapted temperature and weight are known to and can be easily adapted by the skilled person. For example, for polylactic acid the melt flow rate MFR is measured at 210 °C/2.16 kg. Additionally or alternatively, the aliphatic polyester has a specific gravity measured according to ASTM D782 from 0.5 to 5, preferably from 0.7 to 4, and more preferably from 1 to 3. Additionally or alternatively, the aliphatic polyester has a glass transition temperature Tg measured by differential scanning calorimetry (DSC) in the range from 35 to 90°C, preferably from 40 to 70 °C, and more preferably from 45 to 70 °C.

In one embodiment of the present invention, the polyester resin consists of a polyglycolide, poly(dioxanone) and mixtures thereof.

The polyglycolide and/or poly(dioxanone) preferably has/have a number average molecular weight Mn measured by gel permeation chromatography from 5 000 to 200 000 g/mol, preferably from 10 000 to 100 000 g/mol, and more preferably from 15000 to 80000 g/mol. Additionally or alternatively, the polyglycolide and/or poly(dioxanone) preferably has/have a melt flow rate MFR (210 °C, 2.16 kg) measured according to ISO 1133 of from 2.0 to 50.0 g/10 min, preferably of from 2.3 to 35.0 g/10 min and most preferably from 2.3 to 20.0 g/10 min. Additionally or alternatively, the polyglycolide and/or poly(dioxanone) preferably has/have a specific gravity measured according to ASTM D782 from 0.5 to 5, preferably from 0.7 to 4, and more preferably from 1 to 3. Additionally or alternatively, the polyglycolide and/or poly(dioxanone) preferably has/have a glass transition temperature Tg measured by differential scanning calorimetry (DSC) in the range from 35 to 90°C, preferably from 40 to 70 °C, and more preferably from 45 to 70 °C.

Preferred polyester resins according to the present invention are selected from the group comprising polylactic acid, polylactic acid-based polymer and aliphatic polyester, wherein polylactic acid and polylactic acid-based polymer are especially preferred.

It is thus appreciated that the polyester resin is preferably a saturated polyester resin.

The polyester mixture may further comprise additives, such as colouring pigments, fibers, e.g. cellulose, glass or wood fibers, dyes, waxes, lubricants, oxidative- and/or UV-stabilizers, antioxidants and other fillers, such as carbon black, TiO₂, mica, clay, precipitated silica, talc or calcined kaolin.

According to one embodiment, the polyester mixture comprises a filler differing from the calcium carbonate-comprising material of the present composition, preferably the other filler is selected from the group comprising carbon black, silica, ground natural calcium carbonate, precipitated calcium carbonate, nanofillers, graphite, clay, talc, diatomaceous earth, barium sulfate, titanium dioxide, wollastonite, and mixtures thereof. Preferably, the polyester mixture comprises another filler, such as carbon black, TiO₂, mica, clay, precipitated silica, talc or calcined kaolin.

Preferably, the other filler is present in the polyester mixture in a volume ratio with the calcium carbonate-comprising material in the range from 10:90 to 90:10, preferably from 25:75 to 75:25, and more preferably from 40:60 to 60:40, for example 50:50.

It is appreciated that the present invention further relates to a polyester product formed from the polyester mixture as defined herein.

The polyester product may be prepared by any method known to the skilled person. A suitable process for preparing the polyester product comprises the steps of
a) providing a polyester resin,
b) providing from 3 to 82 wt.-%, based on the total weight of the polyester product, of at least one calcium carbonate-comprising material as filler,
c) providing from 0.1 to 8 wt.-%, based on the total weight of the calcium carbonate-comprising material, of at least one grafted polymer comprising at least one succinic anhydride group obtained by grafting maleic anhydride onto a homo- or copolymer comprising butadiene units and optionally styrene units,
d) optionally providing further additives such as colouring pigments, fibers, e.g. cellulose, glass or wood fibers, dyes, waxes, lubricants, oxidative- and/or UV-stabilizers, antioxidants and other fillers, such as carbon black, TiO₂, mica, clay, precipitated silica, talc or calcined kaolin,
e) contacting the components of step a), step b), step c) and optionally step d) in any order, and
f) forming the mixture of step e) such that a polyester product is obtained.

In one embodiment, the polyester product further comprises additive(s). The process thus comprises the steps of
a) providing a polyester resin,
b) providing from 3 to 82 wt.-%, based on the total weight of the polyester product, of at least one calcium carbonate-comprising material as filler,
c) providing from 0.1 to 8 wt.-%, based on the total weight of the calcium carbonate-comprising material, of at least one grafted polymer comprising at least one succinic anhydride group obtained by grafting maleic anhydride onto a homo- or copolymer comprising butadiene units and optionally styrene units,
d) providing further additives such as colouring pigments, fibers, e.g. cellulose, glass or wood fibers, dyes, waxes, lubricants, oxidative- and/or UV-stabilizers, antioxidants and other fillers, such as carbon black, TiO₂, mica, clay, precipitated silica, talc or calcined kaolin,
e) contacting the components of step a), step b), step c) and step d) in any order, and
f) forming the mixture of step e) such that a polyester product is obtained.

If the calcium carbonate-comprising material is further treated with a surface-treatment agent, process step e) further comprises contacting the components of step a), step b), step c) and step d) in any order with the further surface-treatment agent, followed by step f) of forming the mixture of step e) such that a polyester product is obtained.

According to step e) of the inventive process, the components of step a), step b) and step c) are contacted in any order. Preferably, the contacting is carried out by mixing the components to form a mixture. During contacting step e), optionally one or more additives and/or at least one further surface-treatment agentmay be added to the mixture as described hereinabove.

Preferably, in contacting step e) firstly the at least one calcium carbonate-comprising material of step b) is contacted under mixing, in one or more steps, with the at least one grafted polymer of step c) and, if present, subsequently or simultaneously, with the at least one further surface-treatment agent such that a treatment layer comprising the at least one grafted polymer and/or salty reaction product(s) thereof and optionally the further surface-treatment agent and/or salty reaction product(s) thereof is/are formed on the surface of said at least one calcium carbonate-comprising material of step b), and secondly this surface-treated calcium carbonate-comprising material is contacted under mixing, in one or more steps, with the polyester resin of step a).

For example, in contacting step e) firstly the at least one calcium carbonate-comprising material of step b) is contacted under mixing, in one or more steps, with the at least one grafted polymer of step c) such that a treatment layer comprising the at least one grafted polymer and/or salty reaction product(s) thereof is formed on the surface of said at least one calcium carbonate-comprising material of step b), and secondly this surface-treated calcium carbonate-comprising material is contacted under mixing, in one or more steps, with the polyester resin of step a).

Alternatively, in contacting step e) firstly the at least one calcium carbonate-comprising material of step b) is contacted under mixing, in one or more steps, with the at least one grafted polymer of step c) and subsequently or simultaneously, preferably subsequently, with the further surface-treatment agent such that a treatment layer comprising the at least one grafted polymer and/or salty reaction product(s) thereof and the further surface-treatment agent and/or salty reaction product(s) thereof is formed on the surface of said at least one calcium carbonate-comprising material of step b), and secondly this surface-treated calcium carbonate-comprising material is contacted under mixing, in one or more steps, with the polyester resin of step a).

Thus, in contacting step e) firstly the at least one calcium carbonate-comprising material of step b) is contacted under mixing, in one or more steps, with the at least one grafted polymer of step c) and subsequently with the further surface-treatment agent such that a treatment layer comprising the at least one grafted polymer and/or salty reaction product(s) thereof and the further surface-treatment agent and/or salty reaction product(s) thereof is formed on the surface of said at least one calcium carbonate-comprising material of step b), and secondly this surface-treated calcium carbonate-comprising material is contacted under mixing, in one or more steps, with the polyester resin of step a).

In an alternative embodiment, in contacting step e) firstly the at least one calcium carbonate-comprising material of step b) is contacted under mixing, in one or more steps, with the further surface-treatment agent and subsequently with the at least one grafted polymer of step c) such that a treatment layer comprising the at least one grafted polymer and/or salty reaction product(s) thereof and the further surface-treatment agent and/or salty reaction product(s) thereof is formed on the surface of said at least one calcium carbonate-comprising material of step b), and secondly this surface-treated calcium carbonate-comprising material is contacted under mixing, in one or more steps, with the polyester resin of step a).

It is preferred that the at least one calcium carbonate-comprising material of step b) is first contacted under mixing, in one or more steps, with the further surface-treatment agent, followed by a contacting of the obtained surface-treated calcium carbonate-comprising material with the at least one grafted polymer of step c).

Alternatively, in contacting step e) firstly the at least one calcium carbonate-comprising material of step b) is contacted under mixing, in one or more steps, with the at least one grafted polymer of step c) and simultaneously with the further surface-treatment agent such that a treatment layer comprising the at least one grafted polymer and/or salty reaction product(s) thereof and the further surface-treatment agent and/or salty reaction product(s) thereof is formed on the surface of said at least one calcium carbonate-comprising material of step b), and secondly this surface-treated calcium carbonate-comprising material is contacted under mixing, in one or more steps, with the polyester resin of step a).

In view of the above, it is preferred that the components of step b), step c) and the optional further surface-treatment agent are contacted first in order to obtain the composition of the present invention. As regards the process conditions, it is referred to the information provided above when providing detailed information on the method for the preparation of the composition. In a further step, the composition obtained by mixing the components of step b), step c) and the optional further surface-treatment agent is then contacted with the polyester resin of step a) and the further additives of optional step d).

If present, the further additives of step d) are contacted under mixing, in one or more steps, with the surface-treated calcium carbonate-comprising material before or after, preferably after, the surface-treated calcium carbonate-comprising material is contacted under mixing, in one or more steps, with the polyester resin of step a).

It is appreciated that the further additives of optional step d) can be contacted in one or more steps with the components of step a), step b), step c) and the optional further surface-treatment agent. For example, the further additives of optional step d) can be contacted in several steps with the components of step a), step b), step c) and the optional further surface-treatment agent.

Contacting step e) may be performed by any means known to the skilled person, including, but not limited to, blending, extruding, kneading, and high-speed mixing.

Preferably, contacting step e) is performed in an internal mixer and/or external mixer, wherein the external mixer preferably is a cylinder mixer. It is appreciated that step e) is preferably carried out at a temperature of at least 2°C, preferably at least 5°C and most preferably at least 10°C above the melting point of the polyester resin. For example, step e) is carried out at a temperature of 2°C to 30°C, preferably of 5°C to 25°C, and most preferably 10°C to 20°C, above the melting point of the polyester resin.

The mixture of step e) is formed to a polyester product in step f). The forming may be performed by any method known to the skilled person resulting in a polyester product. These methods include, without being limited to, extrusion processes, co-extrusion process, extrusion coating processes, lamination processes, injection molding processes, compression molding processeas, melt-blown processes, spunbonding-processes, staple fiber production processes, blow molding processes and thermoforming processes.

Preferably, contacting step e) is carried out during forming step f). More preferably, contacting step e) is carried out during forming step f) in that the at least one grafted polymer is contacted under mixing with the polyester resin of step a) before or after, preferably after, adding the at least one calcium carbonate-comprising material.

It is appreciated that the process may comprise further steps such as processing the polyester product in any desired shape. Such steps of processing are well known to the skilled person and can be e.g. carried out by shaping the polyester product for example by stretching of a film.

In another aspect, the present invention relates to the use of the at least one grafted polymer comprising at least one succinic anhydride group obtained by grafting maleic anhydride onto a homo- or copolymer comprising butadiene units and optionally styrene units in the preparation of a polyester product formed from a polyester mixture comprising a polyester resin and at least one calcium carbonate-comprising material as filler, to decrease the melt flow rate of such a polyester product by at least 5 % preferably 10%, measured according to DIN EN ISO 1133-1:2011, in comparison to the same polyester product formed from the same polyester mixture comprising the polyester resin and at least one calcium carbonate-comprising material but without the at least one grafted polymer comprising at least one succinic anhydride group obtained by grafting maleic anhydride onto a homo- or copolymer comprising butadiene and optionally styrene units.

In a further aspect, the present invention relates to an article formed from the polyester product, wherein the article is selected from the group comprising hygiene products, medical and healthcare products, filter products, geotextile products, agriculture and horticulture products, clothing, footwear and baggage products, household and industrial products, packaging products, construction products, automotive parts, bottles, cups, and the like.

### Brief description of the figures

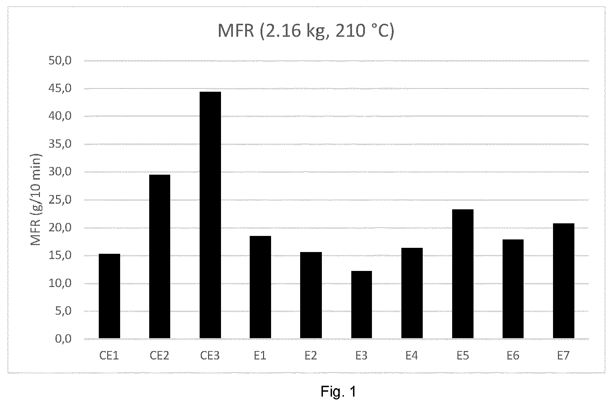

Fig. 1 shows the results for the melt flow rates of a series of compounded polymer compositions
The scope and interest of the invention will be better understood based on the following examples which are intended to illustrate certain embodiments of the present invention and are nonlimitative.

### Examples

### 1. Measurement methods

In the following, measurement methods implemented in the examples are described.

### Particle size distribution

The weight median particle size d₅₀(wt) and weight top cut particle size d₉₈(wt) is determined by the sedimentation method, which is an analysis of sedimentation behaviour in a gravimetric field. The measurement is made with a Sedigraph^{™} 5120, Micromeritics Instrument Corporation. The method and the instrument are known to the skilled person and are commonly used to determine grain size of fillers and pigments. The measurement is carried out in an aqueous solution of 0.1 wt.-% Na₄P₂O₇. The samples were dispersed using a high speed stirrer and sonicated.

The processes and instruments are known to the skilled person and are commonly used to determine the particle size of fillers and pigments.

### Specific surface area (SSA)

The specific surface area was measured via the BET method according to ISO 9277:2010 using nitrogen as adsorbing gas on a Micromeritics ASAP 2460 instrument from Micromeritics. The samples were pretreated in vacuum (10⁻⁵ bar) by heating at 150 °C for a period of 60 min prior to measurement.

### Amount of surface-treatment layer

The amount of the treatment layer on the calcium carbonate-comprising material is calculated theoretically from the values of the BET of the untreated calcium carbonate-comprising material and the amount of the one or more compound(s) that is/are used for the surface-treatment. It is assumed that 100 % of the one or more compound(s) are present as surface treatment layer on the surface of the calcium carbonate-comprising material.

### Molecular weight

The number-average molecular weight Mₙ is measured by gel permeation chromatography, according to ISO 16014-1:2019 and ISO 16014-2/2019.

### Acid number

The acid number is measured according to ASTM D974-14.

### Iodine number

The iodine number is measured according to DIN 53241/1.

### Melt flow rate

The "melt flow rate" was measured on a CEAST Melt Flow modular line instrument from Instron. The instruments and the measuring method are known to the skilled person. The melt flow rate was measured according to DIN EN ISO 1133-1:2011 by using procedure A. The polymer samples to be measured were in the form of granules or pellets with a length of 1 mm to 5 mm. An amount between 6 to 9 g was used for the measurements. Measurement of the samples was made at 210°C with a nominal load of 2.16 kg using a capillary die having an inner diameter of 2.095 mm and a length of 8.00 mm. The preheating without load was performed for 300 seconds and the measure length is 20 mm.

The melt flow rate was obtained under standard conditions. The term "standard conditions" according to the present invention refers to standard ambient temperature and pressure (SATP) which refers to a temperature of 298.15 K (25 °C) and an absolute pressure of exactly 100000 Pa (1 bar, 14.5 psi, 0.98692 atm). All measurements were performed on samples that have been stored under similar conditions after preparation.

### Total residual moisture content

The residual total moisture content was determined by thermogravimetric analysis (TGA). The equipment used to measure the TGA was the Mettler-Toledo TGA/DSC1 (TGA 1 STARe System) and the crucibles used were aluminium oxide 900 µl. The method consists of several heating steps under air (80 mL/min). The first step was a heating from 25 to 105°C at a heating rate of 20°C/minute (step 1), then the temperature was maintained for 10 minutes at 105 °C (step 2), then heating was continued at a heating rate of 20°C/minute from 105 to 400 °C (step 3). The temperature was then maintained at 400 °C for 10 minutes (step 4), and finally, heating was continued at a heating rate of 20°C/minute from 400 to 600 °C (step 5). The residual total moisture content is the cumulated weight loss after steps 1 and 2.

### 2. Materials used

The materials used for the present invention had the characteristics set out in the following.

### Treatment A

Treatment A was a grafted polybutadiene homopolymer comprising at least one succinic anhydride group obtained by grafting maleic anhydride onto a polybutadiene homopolymer (Mn = 3100 Da, viscosity (25 °C) = 6500 cPs +/- 3500, functional groups/chain = 2, anhydride equivalent weight 1238; acid number: 40.1-51.5 meq KOH/g, total acid: 7-9 wt.-%, microstructure (molar % of butadiene): 20-35% 1-2 vinyl functional groups) commercially available from Cray Valley under the trade name RICON^{®} 130MA8 (Cray Valley).

### Treatment B

Treatment B was a grafted polybutadiene homopolymer comprising at least one succinic anhydride group obtained by grafting maleic anhydride onto a polybutadiene homopolymer (Mn = 5000 Da, Brookfield viscosity (25 °C) = 48000 cPs, functional groups/chain = 5, anhydride equivalent weight 981) commercially available from Cray Valley under the trade name RICON^{®} 131MA10.

### Treatment C

Treatment C was a grafted polybutadiene homopolymer comprising at least one succinic anhydride group obtained by grafting maleic anhydride onto a polybutadiene homopolymer (Mn = 2500 Da, Brookfield viscosity (55 °C) = 140000 cPs, functional groups/chain = 3, anhydride equivalent weight 583) commercially available from Cray Valley under the trade name RICON^{®} 156MA17.

### Treatment D

Treatment D was a low molecular weight grafted polybutadiene-styrene copolymer comprising at least one succinic anhydride group obtained by grafting maleic anhydride onto a polybutadiene-styrene copolymer (Mn = 9900 Da, Brookfield viscosity (45 °C) = 170000 cPs, functional groups/chain = 6, anhydride equivalent weight 1651, acid number = 28.5-40 meqKOH/g, Styrene amount: 17-27 wt%) commercially available from Cray Valley under the trade name RICON^{®} 184MA6.

### Treatment E

Treatment E was a mono-substituted alkenyl succinic anhydride (2,5- Furandione, dihydro-, mono-C₁₅₋₂₀-alkenyl derivs., CAS No. 68784-12-3), which was a blend of mainly branched octadecenyl succinic anhydrides (CAS #28777-98-2) and mainly branched hexadecenyl succinic anhydrides (CAS #32072-96-1). More than 80% of the blend was branched octadecenyl succinic anhydrides. The purity of the blend was > 95wt%. The residual olefin content was below 3 wt%.

### Treatment F

Treatment F was a fatty acid mixture 2, which was a 1:1 mixture of stearic acid and palmitic acid.

### Calcium carbonate-comprising filler material 1 (powder 1)

Powder 1 was a dry ground calcium carbonate from Italy (*d*₅₀(wt) = 3.4 µm, *d*₉₈(wt) = 14 µm, BET specific surface area = 2.6 m²/g). The material obtained had a residual total moisture content of 0.21 wt.-%, based on the total dry weight of the at least one calcium carbonate-comprising material.

### Calcium carbonate-comprising filler material 2 (powder 2)

Powder 2 was a stearic acid-surface treated dry ground calcium carbonate from Italy (*d*₅₀(wt) = 3.4 µm, *d*₉₈(wt) = 14 µm, BET specific surface area = 2.6 m²/g). The material obtained had a residual total moisture content of 0.09 wt.-%, based on the total dry weight of the at least one calcium carbonate-comprising material.

### Surface treated calcium carbonate-comprising filler material 3 (powder 3)

900 g of powder 1 was placed in a high speed mixer (Somakon MP-LB Mixer, Somakon Verfahrenstechnik, Germany), and conditioned by stirring for 10 minutes (2000 rpm, 120 °C). After that time, 0.8 parts by weight relative to 100 parts by weight CaCO₃ of Treatment A (7.2 g) was added to the mixture. Stirring and heating was then continued for another 20 minutes (120 °C, 2000 rpm). After that time, the mixture was allowed to cool and the free-flowing powder was collected (powder 3). The material obtained had a residual total moisture content of 0.15 wt.-%, based on the total dry weight of the at least one calcium carbonate-comprising material.

### Surface treated calcium carbonate-comprising filler material 4 (powder 4)

900 g of powder 1 was placed in a high speed mixer (Somakon MP-LB Mixer, Somakon Verfahrenstechnik, Germany), and conditioned by stirring for 10 minutes (2000 rpm, 120 °C). After that time, 0.8 parts by weight relative to 100 parts by weight CaCO₃ of Treatment B (7.2 g) was added to the mixture. Stirring and heating was then continued for another 20 minutes (120 °C, 2000 rpm). After that time, the mixture was allowed to cool and the free-flowing powder was collected (powder 4). The material obtained had a residual total moisture content of 0.16 wt.-%, based on the total dry weight of the at least one calcium carbonate-comprising material.

### Surface treated calcium carbonate-comprising filler material 5 (powder 5)

900 g of powder 1 was placed in a high speed mixer (Somakon MP-LB Mixer, Somakon Verfahrenstechnik, Germany), and conditioned by stirring for 10 minutes (2000 rpm, 120 °C). After that time, 0.8 parts by weight relative to 100 parts by weight CaCO₃ of Treatment C (7.2 g) was added to the mixture. Stirring and heating was then continued for another 20 minutes (120 °C, 2000 rpm). After that time, the mixture was allowed to cool and the free-flowing powder was collected (powder 5).

### Surface treated calcium carbonate-comprising filler material 6 (powder 6)

900 g of powder 1 was placed in a high speed mixer (Somakon MP-LB Mixer, Somakon Verfahrenstechnik, Germany), and conditioned by stirring for 10 minutes (2000 rpm, 120 °C). After that time, 0.8 parts by weight relative to 100 parts by weight CaCO₃ of Treatment D (7.2 g) was added to the mixture. Stirring and heating was then continued for another 20 minutes (120 °C, 2000 rpm). After that time, the mixture was allowed to cool and the free-flowing powder was collected (powder 6).

### Surface treated calcium carbonate-comprising filler material 7 (powder 7)

900 g of powder 1 was placed in a high speed mixer (Somakon MP-LB Mixer, Somakon Verfahrenstechnik, Germany), and conditioned by stirring for 10 minutes (2000 rpm, 120 °C). After that time, 0.4 parts by weight relative to 100 parts by weight CaCO₃ of Treatment A (3.6 g) and 0.4 parts by weight relative to 100 parts by weight CaCO₃ of Treatment F (3.6 g) were added directly one after another in the given order to the mixture. Stirring and heating is then continued for another 20 minutes (120 °C, 2000 rpm). After that time, the mixture was allowed to cool and the free-flowing powder was collected (powder 7). The material obtained had a residual total moisture content of 0.12 wt.-%, based on the total dry weight of the at least one calcium carbonate-comprising material.

### Surface treated calcium carbonate-comprising filler material 8 (powder 8)

900 g of powder 1 was placed in a high speed mixer (Somakon MP-LB Mixer, Somakon Verfahrenstechnik, Germany), and conditioned by stirring for 10 minutes (2000 rpm, 120 °C). After that time, 0.4 parts by weight relative to 100 parts by weight CaCO₃ of Treatment A (3.6 g) and 0.4 parts by weight relative to 100 parts by weight CaCO₃ of Treatment E (3.6 g) were added directly one after another in the given order to the mixture. Stirring and heating was then continued for another 20 minutes (120 °C, 2000 rpm). After that time, the mixture was allowed to cool and the free-flowing powder was collected (powder 8).

### Calcium carbonate-comprising filler material 9 (powder 9)

Powder 9 was a wet ground and subsequently dried ground calcium carbonate (GCC, marble) from Norway treated with treatment F (0.6%) and treatment A (2.5%) (*d*₅₀(wt) = 0.3 µm, *d*₉₈(wt) = 1.4 µm, BET specific surface area = 14.4 m²/g). The material obtained had a residual total moisture content of 0.16 wt.-%, based on the total dry weight of the at least one calcium carbonate-comprising material.

### Precipitated calcium carbonate-comprising filler material 10 (powder 10)

Powder 10 was a precipitated calcium carbonate (colloidal PCC) from Austria (*d*₅₀(wt) = 1.5 µm, *d*₉₈(wt) = 8 µm, BET specific surface area = 34.4 m²/g). The material obtained had a residual total moisture content of 0.60 wt.-%, based on the total dry weight of the at least one calcium carbonate-comprising material.

### Surface-treated precipitated calcium carbonate-comprising filler material 11 (powder 11)

Powder 11 was prepared by surface-treating powder 10 with 2.5 wt% of treatment A. To carry out the treatment, the treatment A (25 g) was first dispersed in 200 mL of deionized water, heated to 60 °C and neutralized to pH 10 with NaOH solution.

A suspension of powder 11 (1.00 kg in 7 L deionized water) was prepared in a 10 L ESCO batch reactor and heated to 85 °C. The pH was adjusted to 10 with Ca(OH)₂ and the neutralized treatment agent was then added under vigorous stirring. Mixing was continued at 85 °C for 45 minutes, and the suspension was then transferred to a metallic tray and dried in an oven (110 °C). The dried cake was then deagglomerated using a Retsch SR300 rotor beater mill. The material obtained had a residual total moisture content of 0.48 wt.-%, based on the total dry weight of the at least one calcium carbonate-comprising material.

### Precipitated calcium carbonate-comprising filler material 12 (powder 12)

Powder 12 was a precipitated calcium carbonate (colloidal PCC) from Austria (*d*₅₀(wt) = 2.7 µm, *d*₉₈(wt) = 3.9 µm, BET specific surface area = 70.8 m²/g). The material had a residual total moisture content of 1.22 wt.-%, based on the total dry weight of the at least one calcium carbonate-comprising material.

### Surface-treated precipitated calcium carbonate-comprising filler material 13 (powder 13)

Powder 13 was prepared by surface-treating powder 12 with 2.5 wt% of treatment A. To carry out the treatment, the treatment A (25 g) was first dispersed in 200 mL of deionized water, heated to 60 °C and neutralized to pH 10 with NaOH solution.

A suspension of powder 13 (1.00 kg in 7 L deionized water) was prepared in a 10 L ESCO batch reactor and heated to 85 °C. The pH was adjusted to 10 with Ca(OH)₂ and the neutralized treatment agent was then added under vigorous stirring. Mixing was continued at 85 °C for 45 minutes, and the suspension was then transferred to a metallic tray and dried in an oven (110 °C). The dried cake was then deagglomerated using a Retsch SR300 rotor beater mill. The material obtained had a residual total moisture content of 0.96 wt.-%, based on the total dry weight of the at least one calcium carbonate-comprising material.

### Surface-treated precipitated calcium carbonate-comprising filler material 14 (powder 14)

Powder 14 was prepared by surface-treating powder 12 with 5 wt% of treatment A. To carry out the treatment, the treatment A (45 g) was first dispersed in 300 mL of deionized water, heated to 60 °C and neutralized to pH 10 with NaOH solution.

A suspension of powder 14 (0.9 kg in 7 L deionized water) was prepared in a 10 L ESCO batch reactor and heated to 85 °C. The pH was adjusted to 10 with Ca(OH)₂ and the neutralized treatment agent was then added under vigorous stirring. Mixing was continued at 85 °C for 45 minutes, and the suspension was then transferred to a metallic tray and dried in an oven (110 °C). The dried cake was then deagglomerated using a Retsch SR300 rotor beater mill.

### Calcium carbonate-comprising filler material 15 (powder 15)

Powder 15 was an untreated wet ground spray dried limestone from France (*d*₅₀(wt) = 0.7 µm, *d*₉₈(wt) = 2.9 µm, BET SSA = 7.9 m²/g)

### Surface-treated Calcium carbonate-comprising filler material 16 (powder 16)

1000 g of powder 15 was placed in a high speed mixer (Somakon MP-LB Mixer, Somakon Verfahrenstechnik, Germany), and conditioned by stirring for 5 minutes (700 rpm, 145 °C). After that time, 1.8 parts by weight relative to 100 parts by weight CaCO₃ of Treatment A (18 g) were added to the mixture. Stirring and heating was then continued for another 15 minutes (145 °C, 700 rpm). After that time, the mixture was allowed to cool and the free-flowing powder was collected (powder 16). The material obtained had a residual total moisture content of 0.05 wt.-%, based on the total dry weight of the at least one calcium carbonate-comprising material.

### Calcium carbonate-comprising filler material 17 (powder 17)

Powder 17 was a wet ground and spray dried calcium carbonate (marble) from Italy (sedigraph: *d*₅₀(wt) = 1.8 µm, *d*₉₈(wt) = 6.1 µm; BET = 3.3 m²/g). The material obtained had a residual total moisture content of 0.06 wt.-%, based on the total dry weight of the at least one calcium carbonate-comprising material.

### Surface-treated Calcium carbonate-comprising filler material 18 (powder 18)

1100 g of powder 17 was placed in a high speed mixer (Somakon MP-LB Mixer, Somakon Verfahrenstechnik, Germany), and conditioned by stirring for 10 minutes (1000 rpm, 120 °C). After that time, 1.0 parts by weight relative to 100 parts by weight CaCO₃ of Treatment A (11 g) was added to the mixture. Stirring and heating was then continued for another 15 minutes (120 °C, 1000 rpm). After that time, the mixture was allowed to cool and the free-flowing powder was collected (powder 18). The material obtained had a residual total moisture content of 0.04 wt.-%, based on the total dry weight of the at least one calcium carbonate-comprising material.

### 3. Examples

### Polymer component

As polymer component polylactic acid was used which is commercially available from NatureWorks under the trade name Biopolymer 2003D. The polylactic acid is a PDLLA comprising 4.6 wt.-% of D isomers, based on the total weight of the polylactic acid. Furthermore, the PDLLA has a specific gravity of 1.24 and a glass transition temperature from 55 to 60 °C. The PDLLA has residual monomer content of 0.21 wt.-%, based on the total weight of the polylactic acid.

### Polymer compounding preparations

The compounded polymer compositions were prepared in a two-step synthesis.

In a first step, the polymer component polylactic acid was added to a twin roll mill (Collin 150, Walzwerk 150 x 400, Germany) followed by the addition of the calcium carbonate-comprising filler material after the PLA has been melted. The at least one grafted polymer was present on the surface of the calcium carbonate-comprising material and/or was added separately afterwards during compounding. The compounding of the composition was carried out with a total amount of 120 g of material (calcium carbonate-comprising material + polymer component + at least one grafted polymer) using the conditions given in table 1 below.

**Table 1: Compounding conditions**

| Composition | Calcium carbonate comprising material | Various amounts |
|---|---|---|
| | Polylactic acid as polymer component | Various amounts |
| | at least one grafted polymer | optional |
| Roll speed | 20 rpm | |
| Speed difference (typical) | -40 % | |
| Thickness: | 0.6 mm | |
| Temperature | 200 °C | |

After obtaining a homogeneous mixture, the melt was removed from the rolls and added again (operation repeated 3 times) for a total compounding time on the roll mill of 11 minutes (unless indicated otherwise).

In a second step, the compounded polymer composition was treated in a press (Collin P 300 P, Dr. Collin, Germany). Approx. 90 g of the compounded polymer composition were cut in pieces and pressed between 2 metal plates to obtain sheets of the following dimensions: 169 x 169 x 2 mm³. The used press program is given in table 2 below.

**Table 2: Press conditions**

| Temperature [°C] | Time [s] | Pressure [bar] |
|---|---|---|
| 210 | 60 | 20 |
| 210 | 90 | 200 |
| cooling | 90 | 200 |

The compounding was performed in a room at 25 ±2 °C at 40-50 % rH.

The amounts of the used materials and the formulation of the compounded polymer compositions is given in table 3 below. As especially the melt flow rate of the referenced material, i.e. unfilled polymer component, may vary with time, comparative examples were made for each series of test.

**Table 3: Compounded polymer compositions**

| Example | Polymer component in weight parts | Calcium carbonate comprising material in weight parts | grafted polymer in weight parts |
|---|---|---|---|
| CE1 | 100 | - | - |
| CE2 | 100 | Powder 1 (20) | - |
| CE3 | 100 | Powder 2 (20) | - |
| E1 | 100 | Powder 3 (20) | * |
| E2 | 100 | Powder 4 (20) | * |
| E3 | 100 | Powder 5 (20) | * |
| E4 | 100 | Powder 6 (20) | * |
| E5 | 100 | Powder 7 (20) | * |
| E6 | 100 | Powder 8 (20) | * |
| E7 | 100 | Powder 1 (20) | Treatment A^{#} (0.16) |

| | | | |
|---|---|---|---|
| * The grafted polymer was present on the surface of the calcium carbonate-comprising material ^{#} The grafted polymer was added directly during compounding, i.e. the grafted polymer is not present on the surface of the calcium carbonate-comprising material | | | |

The melt flow rates of a series of compounded polymer compositions are presented in Table 4 below. The analysis were performed on samples produced at the same moment to minimize the effect of aging on the analysis results. Table 4 shows the melt flow rate of comparative examples CE1 to CE3 and inventive example E1 to E7.

**Table 4: melt flow rate of the compounded polymer compositions**

| Example | MFR (g/10 min) | % reduction vs comparative example |
|---|---|---|
| CE1 | 15.2 | / |
| CE2 | 29.4 | / |
| CE3 | 44.3 | / |
| E1 | 18.4 | 37.4 % (CE2) |
| E2 | 15.5 | 47.3% (CE2) |
| E3 | 12.1 | 58.8 % (CE2) |
| E4 | 16.3 | 44.6 % (CE2) |
| E5 | 23.2 | 21.1% (CE2) |
| E6 | 17.8 | 39.5 % (CE2) |
| E7 | 20.7 | 29.6 % (CE2) |

As can be seen from the examples by the use of the at least one grafted polymer before or during compounding of a polymer composition comprising polylactic acid as polymer component and at least one calcium carbonate-comprising material as filler, it was possible to decrease the melt flow rate of such a compounded polymer composition. More precisely, it was possible to decrease the melt flow rate between 21.1 % to 58.8 % in comparison to the same polymer composition that has been treated the same way but without using the at least one grafted polymer. The measured results also are graphically visualized in figure 1.

## Claims

1. A composition comprising a calcium carbonate-comprising material selected from among ground calcium carbonate (GCC), precipitated calcium carbonate (PCC) and mixtures thereof, and from 0.1 to 8 wt.-%, based on the total weight of the calcium carbonate-comprising material, of at least one grafted polymer comprising at least one succinic anhydride group obtained by grafting maleic anhydride onto a homo- or copolymer comprising butadiene units and optionally styrene units and/or salty reaction products thereof.

2. The composition according to claim 1, wherein the ground calcium carbonate (GCC) is selected from the group consisting of marble, limestone, dolomite, chalk and mixtures thereof, or the precipitated calcium carbonate (PCC) is selected from the group consisting of the aragonitic, vateritic and calcitic mineralogical crystal forms, colloidal PCC, and mixtures thereof, preferably the calcium carbonate-comprising material is ground calcium carbonate.

3. The composition according to claims 1 or 2, wherein the calcium carbonate-comprising material has
i) a weight median particle size *d*₅₀ value measured by the sedimentation method in the range from 0.1 µm to 10 µm, preferably in the range from 0.15 µm to 5 µm, more preferably in the range from 0.2 µm to 3 µm and most preferably in the range from 0.25 µm to 3 µm, e.g. from 0.3 µm to 2 µm or from 0.3 µm to 1.5 µm, and/or
ii) a top cut (*d*₉₈) measured by the sedimentation method of ≤ 45 µm, preferably of ≤ 30 µm, more preferably of ≤ 20 µm and most preferably of ≤ 15 µm, and/or
iii) a specific surface area (BET) of from 0.5 to 150 m²/g as measured using nitrogen and the BET method according to ISO 9277:2010, preferably from 1 to 80 m²/g, and/or
iv) a residual total moisture content of ≤ 2 wt.-%, based on the total dry weight of the at least one calcium carbonate-comprising material, preferably ≤ 1.5 wt.-%, more preferably ≤ 1.2 wt.-%, and most preferably ≤ 0.8 wt.-%..

4. The composition according to any one of claims 1 to 3, wherein the at least one grafted polymer comprising at least one unsubstituted succinic anhydride group obtained by grafting maleic anhydride onto a homo- or copolymer comprising butadiene units and/or salty reaction products thereof and optionally styrene units.

5. The composition according to any one of claims 1 to 4, wherein the at least one grafted polymer is
a) a grafted polybutadiene homopolymer comprising at least one succinic anhydride group obtained by grafting maleic anhydride onto a polybutadiene homopolymer and having
i) a number average molecular weight Mn measured by gel permeation chromatography from 1 000 to 20 000 g/mol, preferably from 1 400 to 15 000 g/mol, and more preferably from 2 000 to 10 000 g/mol, and/or
ii) a number of functional groups per chain in the range from 2 to 12, preferably from 2 to 9, and more preferably from 2 to 6, and/or
iii) an anhydride equivalent weight in the range from 400 to 2 200, preferably from 500 to 2 000, and more preferably from 550 to 1 800,
or
b) a grafted polybutadiene-styrene copolymer comprising at least one succinic anhydride group obtained by grafting maleic anhydride onto a polybutadiene-styrene copolymer and having a 1,2 vinyl content from 20 to 80 mol.-%, preferably from 20 to 40 mol.-%, based on the total weight of the grafted polybutadiene-styrene copolymer.

6. The composition according to any one of claims 1 to 5, wherein the composition comprises the at least one calcium carbonate-comprising material and the at least one grafted polymer and/or the salty reaction products thereof as physical mixture and/or in that the at least one grafted polymer and/or the salty reaction products thereof are present on the surface of the at least one calcium carbonate-comprising material in form of a treatment layer.

7. A polyester mixture comprising
a) a polyester resin, and
b) from 3 to 82 wt.-%, based on the total weight of the mixture, of the composition according to any one of claims 1 to 6,
wherein the composition is dispersed in the polyester resin.

8. The polyester mixture according to claim 7, wherein the polyester resin consists of one or more saturated polyester resins selected from the group comprising polylactic acid, polylactic acid-based polymer, aliphatic polyester such as polyhydroxyalkanoates, e.g. polyhydroxybutyrate, poly-3-hydroxybutyrate (P3HB), polyhydroxyvalerate, polyhydroxybutyrate-polyhydroxyvalerate copolymer, poly(3- hydroxybutyrate-co-3-hydroxyvalerate); polyethylene terephthalate (PET), polybutylene terephthalate (PBT), polybutyrate-adipate-terephthalate (PBAT), polyglycolide, poly(dioxanone) and mixtures thereof, preferably selected from the group comprising polylactic acid, polylactic acid-based polymer and mixtures thereof.

9. The polyester mixture according to claims 7 or 8, wherein the polyester resin has
i) a number average molecular weight Mn measured by gel permeation chromatography from 5 000 to 200 000 g/mol, preferably from 10 000 to 100 000 g/mol, and more preferably from 15000 to 80000 g/mol, and/or
ii) a specific gravity measured according to ASTM D782 from 0.5 to 5, preferably from 0.7 to 4, and more preferably from 1 to 3, and/or
iii) a glass transition temperature Tg measured by differential scanning calorimetry (DSC) in the range from 35 to 90°C, preferably from 40 to 70 °C, and more preferably from 45 to 70 °C.

10. The polyester mixture according to any one of claims 7 to 9, wherein the polyester resin consists of polylactic acid, preferably polylactic acid having from 1 to 10 wt.-%, more preferably between 4 to 6 wt.-% of D isomers, based on the total weight of the polylactic acid.

11. The polyester mixture according to any one of claims 7 to 10, wherein the mixture further comprises additives such as colouring pigments, fibers, e.g. cellulose, glass or wood fibers, dyes, waxes, lubricants, oxidative- and/or UV-stabilizers, antioxidants and other fillers, such as carbon black, TiO₂, mica, clay, precipitated silica, talc or calcined kaolin.

12. A polyester product formed from the polyester mixture of any one of claims 7 to 11.

13. A process for preparing a polyester product as defined in claim 12, wherein the process comprises the steps of
a) providing a polyester resin,
b) providing from 3 to 82 wt.-%, based on the total weight of the polyester product, of at least one calcium carbonate-comprising material as filler,
c) providing from 0.1 to 8 wt.-%, based on the total weight of the calcium carbonate-comprising material, of at least one grafted polymer comprising at least one succinic anhydride group obtained by grafting maleic anhydride onto a homo- or copolymer comprising butadiene units and optionally styrene units,
d) optionally providing further additives such as colouring pigments, fibers, e.g. cellulose, glass or wood fibers, dyes, waxes, lubricants, oxidative- and/or UV-stabilizers, antioxidants and other fillers, such as carbon black, TiO₂, mica, clay, precipitated silica, talc or calcined kaolin,
e) contacting the components of step a), step b), step c) and optionally step d) in any order, and
f) forming the mixture of step e) such that a polyester product is obtained.

14. The process according to claim 13, wherein in contacting step e) firstly the at least one calcium carbonate-comprising material of step b) is contacted under mixing, in one or more steps, with the at least one grafted polymer of step c) such that a treatment layer comprising the at least one grafted polymer and/or salty reaction product(s) thereof is formed on the surface of said at least one calcium carbonate-comprising material of step b), and secondly this surface-treated calcium carbonate-comprising material is contacted under mixing, in one or more steps, with the polyester resin of step a).

15. The process according to claim 13, wherein contacting step e) is carried out during forming step f) in that the at least one grafted polymer is contacted under mixing with the polyester resin of step a) before or after, preferably after, adding the at least one calcium carbonate-comprising material.

16. Use of at least one grafted polymer comprising at least one succinic anhydride group obtained by grafting maleic anhydride onto a homo- or copolymer comprising butadiene units and optionally styrene units in the preparation of a polyester product formed from a polyester mixture comprising a polyester resin and at least one calcium carbonate-comprising material as filler, to decrease the melt flow rate of such a polyester product by at least 5 % preferably 10%, measured according to DIN EN ISO 1133-1:2011, in comparison to the same polyester product formed from the same polyester mixture comprising the polyester resin and at least one calcium carbonate-comprising material but without the at least one grafted polymer comprising at least one succinic anhydride group obtained by grafting maleic anhydride onto a homo- or copolymer comprising butadiene and optionally styrene units.

17. Article formed from a polyester product according to claim 12, wherein the article is selected from the group comprising hygiene products, medical and healthcare products, filter products, geotextile products, agriculture and horticulture products, clothing, footwear and baggage products, household and industrial products, packaging products, construction products, automotive parts, bottles, cups, and the like.

## Patentansprüche

1. Eine Zusammensetzung, umfassend ein Calciumcarbonat-umfassendes Material, ausgewählt aus gemahlenem Calciumcarbonat (GCC), gefälltem Calciumcarbonat (PCC) und Mischungen davon, sowie 0,1 bis 8 Gew.-%, bezogen auf das Gesamtgewicht des Calciumcarbonat-umfassenden Materials, mindestens eines gepfropften Polymers, umfassend mindestens eine Bernsteinsäureanhydridgruppe, das durch Pfropfen von Maleinsäureanhydrid auf ein Homo- oder Copolymer, das Butadieneinheiten und gegebenenfalls Styroleinheiten und/oder salzhaltige Reaktionsprodukte davon umfasst, erhalten wird.

2. Die Zusammensetzung nach Anspruch 1, wobei das gemahlene Calciumcarbonat (GCC) aus der Gruppe ausgewählt ist, bestehend aus Marmor, Kalkstein, Dolomit, Kreide und Mischungen davon, oder das gefällte Calciumcarbonat (PCC) aus der Gruppe ausgewählt ist, bestehend aus den mineralogischen Kristallformen Aragonit, Vaterit und Calcit, kolloidalem PCC und Mischungen davon, wobei das Calciumcarbonat-umfassende Material vorzugsweise gemahlenes Calciumcarbonat ist.

3. Die Zusammensetzung nach Anspruch 1 oder 2, wobei das Calciumcarbonat-umfassende Material
i) eine gewichtsmittleren Partikelgröße *d*₅₀, gemessen mittels der Sedimentationsmethode, im Bereich von 0,1 µm bis 10 µm, vorzugsweise im Bereich von 0,15 µm bis 5 µm, noch bevorzugter im Bereich von 0,2 µm bis 3 µm und am meisten bevorzugt im Bereich von 0,25 µm bis 3 µm, z. B. von 0,3 µm bis 2 µm oder von 0,3 µm bis 1,5 µm, und/oder
ii) einen Topcut (*d*₉₈), gemessen mittels der Sedimentationsmethode, von ≤ 45 µm, vorzugsweise von ≤ 30 µm, noch bevorzugter von ≤ 20 µm und am meisten bevorzugt von ≤ 15 µm, und/oder
iii) eine spezifische Oberfläche (BET) von 0,5 bis 150 m²/g, gemessen unter Verwendung von Stickstoff und der BET-Methode gemäß ISO 9277:2010, vorzugsweise von 1 bis 80 m²/g, und/oder
iv) einen Restfeuchtegehalt von ≤ 2 Gew.-%, bezogen auf das gesamte Trockengewicht des mindestens einen Calciumcarbonat-umfassenden Materials, vorzugsweise ≤ 1,5 Gew.-%, noch bevorzugter ≤ 1,2 Gew.-% und am meisten bevorzugt ≤ 0,8 Gew.-%,
aufweist.

4. Die Zusammensetzung nach einem der Ansprüche 1 bis 3, wobei das mindestens eine gepfropfte Polymer mindestens eine unsubstituierte Bernsteinsäureanhydridgruppe umfasst, das durch Pfropfen von Maleinsäureanhydrid auf ein Homo- oder Copolymer, das Butadieneinheiten und/oder salzhaltige Reaktionsprodukte davon und gegebenenfalls Styroleinheiten umfasst, erhalten wird.

5. Die Zusammensetzung nach einem der Ansprüche 1 bis 4, wobei das mindestens eine gepfropfte Polymer
a) ein gepfropftes Polybutadien-Homopolymer ist, umfassend mindestens eine Bernsteinsäureanhydridgruppe, die durch Pfropfen von Maleinsäureanhydrid auf ein Polybutadien-Homopolymer erhalten wird und
i) ein mittels Gelpermeationschromatographie bestimmtes zahlenmittleres Molekulargewicht Mn von 1 000 bis 20 000 g/mol, vorzugsweise von 1 400 bis 15 000 g/mol und noch bevorzugter von 2 000 bis 10 000 g/mol, und/oder
ii) eine Anzahl an funktionellen Gruppen pro Kette im Bereich von 2 bis 12, vorzugsweise von 2 bis 9 und noch bevorzugter von 2 bis 6, und/oder
iii) ein Anhydridäquivalentgewicht im Bereich von 400 bis 2 200, vorzugsweise von 500 bis 2 000 und noch bevorzugter von 550 bis 1 800,
aufweist,
oder
b) ein gepfropftes Polybutadien-Styrol-Copolymer ist, umfassend eine Bernsteinsäureanhydridgruppe, die durch Pfropfen von Maleinsäureanhydrid auf ein Polybutadien-Styrol-Copolymer erhalten wird und einen 1,2-Vinylgehalt von 20 bis 80 Mol-%, vorzugsweise von 20 bis 40 Mol-%, bezogen auf das Gesamtgewicht des gepfropften Polybutadien-Styrol-Copolymers, aufweist.

6. Die Zusammensetzung nach einem der Ansprüche 1 bis 5, wobei die Zusammensetzung das mindestens eine Calciumcarbonat-umfassende Material und das mindestens eine gepfropfte Polymer und/oder deren salzhaltigen Reaktionsprodukte als physikalisches Gemisch umfasst und/oder wobei das mindestens eine gepfropfte Polymer und/oder deren salzhaltigen Reaktionsprodukte auf der Oberfläche des mindestens einen Calciumcarbonat-umfassenden Materials in Form einer Behandlungsschicht vorliegen.

7. Eine Polyestermischung, umfassend
a) ein Polyesterharz, und
b) 3 bis 82 Gew.-%, bezogen auf das Gesamtgewicht der Mischung, der Zusammensetzung gemäß einem der Ansprüche 1 bis 6,
wobei die Zusammensetzung in dem Polyesterharz dispergiert ist.

8. Die Polyestermischung nach Anspruch 7, wobei das Polyesterharz aus einem oder mehreren gesättigten Polyesterharzen besteht, ausgewählt aus der Gruppe umfassend Polymilchsäure, Polymilchsäure-basiertes Polymer, aliphatischen Polyester wie Polyhydroxyalkanoaten, z. B. Polyhydroxybutyrat, Poly-3-hydroxybutyrat (P3HB), Polyhydroxyvalerat, Polyhydroxybutyrat-Polyhydroxyvalerat-Copolymer, Poly(3-hydroxybutyrat-co-3-hydroxyvalerat); Polyethylenterephthalat (PET), Polybutylenterephthalat (PBT), Polybutyrat-Adipat-Terephthalat (PBAT), Polyglykolid, Poly(dioxanon) und Mischungen davon, vorzugsweise ausgewählt aus der Gruppe umfassend Polymilchsäure, Polymilchsäure-basiertes Polymer und Mischungen davon.

9. Die Polyestermischung gemäß den Ansprüchen 7 oder 8, wobei das Polyesterharz
i) ein mittels Gelpermeationschromatographie gemessenes zahlenmittleres Molekulargewicht Mn von 5 000 bis 200 000 g/mol, vorzugsweise von 10 000 bis 100 000 g/mol und noch bevorzugter von 15 000 bis 80 000 g/mol, und/oder
ii) ein nach ASTM D782 gemessenes spezifisches Gewicht von 0,5 bis 5, vorzugsweise von 0,7 bis 4 und noch bevorzugter von 1 bis 3, und/oder
iii) eine mittels dynamische Differenzkalorimetrie (DSC) gemessene Glasübergangstemperatur Tg im Bereich von 35 bis 90 °C, vorzugsweise von 40 bis 70 °C und noch bevorzugter von 45 bis 70 °C,
aufweist.

10. Die Polyestermischung gemäß einem der Ansprüche 7 bis 9, wobei das Polyesterharz aus Polymilchsäure besteht, vorzugsweise aus Polymilchsäure, die 1 bis 10 Gew.-%, noch bevorzugter mit 4 bis 6 Gew.-%, an D-Isomeren, bezogen auf das Gesamtgewicht der Polymilchsäure, aufweist.

11. Die Polyestermischung gemäß einem der Ansprüche 7 bis 10, wobei die Mischung Additive wie Farbpigmente, Fasern, z. B. Zellulose-, Glas- oder Holzfasern, Farbstoffe, Wachse, Gleitmittel, Oxidations- und/oder UV-Stabilisatoren, Antioxidantien und andere Füllstoffe wie Ruß, TiO₂, Glimmer, Ton, gefälltes Siliciumdioxid, Talk oder kalziniertes Kaolin umfasst.

12. Ein Polyesterprodukt, das aus der Polyestermischung nach einem der Ansprüche 7 bis 11 gebildet ist.

13. Ein Verfahren zur Herstellung eines Polyesterprodukts gemäß Anspruch 12, wobei das Verfahren die folgenden Schritte umfasst:
a) Bereitstellen eines Polyesterharzes,
b) Bereitstellen von 3 bis 82 Gew.-%, bezogen auf das Gesamtgewicht des Polyesterprodukts, mindestens eines Calciumcarbonat-umfassenden Materials als Füllstoff,
c) Bereitstellen von 0,1 bis 8 Gew.-%, bezogen auf das Gesamtgewicht des Calciumcarbonat-umfassenden Materials, mindestens eines gepfropften Polymers, umfassend mindestens eine Bernsteinsäureanhydridgruppe, das durch Pfropfen von Maleinsäureanhydrid auf ein Homo- oder Copolymer, das Butadieneinheiten und gegebenenfalls Styroleinheiten umfasst, erhalten wird,
d) gegebenenfalls Bereitstellen weiteres Additive wie Farbpigmente, Fasern, z. B. Zellulose-, Glas- oder Holzfasern, Farbstoffe, Wachse, Gleitmittel, Oxidations- und/oder UV-Stabilisatoren, Antioxidantien und andere Füllstoffe wie Ruß, TiO₂, Glimmer, Ton, gefälltes Siliciumdioxid, Talk oder kalziniertes Kaolin,
e) miteinander in Kontakt bringen der Komponenten aus Schritt a), Schritt b), Schritt c) und gegebenenfalls Schritt d) in beliebiger Reihenfolge, und
f) Formen der Mischung aus Schritt e), so dass ein Polyesterprodukt erhalten wird.

14. Das Verfahren nach Anspruch 13, wobei im Kontaktierungsschritt e) zunächst das mindestens eine Calciumcarbonat-umfassende Material aus Schritt b) unter Mischen in einem oder mehreren Schritten mit dem mindestens einen gepfropften Polymer aus Schritt c) in Kontakt gebracht wird, so dass sich auf der Oberfläche des mindestens einen Calciumcarbonat-umfassenden Materials aus Schritt b) eine Behandlungsschicht bildet, die das mindestens eine gepfropfte Polymer und/oder salzhaltige Reaktionsprodukt(e) davon umfasst, und zweitens dieses oberflächenbehandelte Calciumcarbonat-umfassende Material wird unter Rühren in einem oder mehreren Schritten mit dem Polyesterharz aus Schritt a) in Kontakt gebracht.

15. Das Verfahren nach Anspruch 13, wobei der Kontaktierungsschritt e) während des Formungsschritts f) durchgeführt wird, indem das mindestens eine gepfropfte Polymer unter Rühren mit dem Polyesterharz aus Schritt a) vor oder nach, vorzugsweise nach, der Zugabe des mindestens einen Calciumcarbonat-umfassenden Materials in Kontakt gebracht wird.

16. Verwendung mindestens eines gepfropften Polymers, umfassend mindestens eine Bernsteinsäureanhydridgruppe, das durch Pfropfen von Maleinsäureanhydrid auf ein Homo- oder Copolymer, das Butadieneinheiten und gegebenenfalls Styroleinheiten umfasst, erhalten wird, bei der Herstellung eines Polyesterprodukts, das aus einer Polyestermischung gebildet wird, die ein Polyesterharz und mindestens ein Calciumcarbonat-umfassendes Material als Füllstoff umfasst, um die Schmelzflussrate eines solchen Polyesterprodukts um mindestens 5 %, vorzugsweise 10 %, gemessen gemäß DIN EN ISO 1133-1:2011, im Vergleich zu demselben Polyesterprodukt, das aus derselben Polyestermischung gebildet ist, die das Polyesterharz und mindestens ein Calciumcarbonat-umfassendes Material umfasst, jedoch ohne das mindestens eine gepfropfte Polymer, umfassend mindestens eine Bernsteinsäureanhydridgruppe, das durch Pfropfen von Maleinsäureanhydrid auf ein Homo- oder Copolymer, das Butadien- und gegebenenfalls Styroleinheiten umfasst, erhalten wird.

17. Gegenstand, der aus einem Polyesterprodukt gemäß Anspruch 12 gebildet ist, wobei der Gegenstand ausgewählt ist aus der Gruppe umfassend Hygieneprodukte, medizinische und Gesundheitsprodukte, Filterprodukte, Geotextilprodukte, Produkte für die Landwirtschaft und den Gartenbau, Bekleidung, Schuh- und Gepäckprodukte, Haushalts- und Industrieprodukte, Verpackungsprodukte, Bauprodukte, Automobilteile, Flaschen, Becher und dergleichen.

## Revendications

1. Composition comprenant un matériau comprenant du carbonate de calcium choisi parmi le carbonate de calcium broyé (GCC), le carbonate de calcium précipité (PCC) et des mélanges de ceux-ci, et de 0,1 à 8 % en poids, en se basant sur le poids total du matériau comprenant du carbonate de calcium, d'au moins un polymère greffé comprenant au moins un groupe anhydride succinique obtenu par greffage d'anhydride maléique sur un homo- ou copolymère comprenant des motifs butadiène et éventuellement des motifs styrène et/ou des produits réactionnels sous forme de sels de celui-ci.

2. Composition selon la revendication 1, dans laquelle le carbonate de calcium broyé (GCC) est choisi dans le groupe constitué par le marbre, le calcaire, la dolomite, la craie et des mélanges de ceux-ci, ou le carbonate de calcium précipité (PCC) est choisi dans le groupe constitué par les formes cristallines minéralogiques aragonitiques, vatéritiques et calcitiques, le CCP colloïdal et des mélanges de ceux-ci, de préférence, le matériau comprenant du carbonate de calcium est du carbonate de calcium broyé.

3. Composition selon les revendications 1 ou 2, dans laquelle le matériau comprenant du carbonate de calcium a
i) une valeur de taille de particule médiane en poids *d*₅₀ mesurée par la méthode de sédimentation comprise dans la plage allant de 0,1 µm à 10 µm, de préférence dans la plage allant de 0,15 µm à 5 µm, plus préférablement dans la plage allant de 0,2 µm à 3 µm et de manière préférée entre toutes dans la plage allant de 0,25 µm à 3 µm, par ex. de 0,3 µm à 2 µm ou de 0,3 µm à 1,5 µm, et/ou
ii) une coupe supérieure (*d₉₈*) mesurée par la méthode de sédimentation ≤ 45 µm, de préférence ≤ 30 µm, plus préférablement ≤ 20 µm et de manière préférée entre toutes ≤ 15 µm, et/ou
iii) une surface spécifique (BET) de 0,5 à 150 m²/g mesurée en utilisant de l'azote et la méthode BET selon la norme ISO 9277:2010, de préférence de 1 à 80 m²/g, et/ou
iv) une teneur en eau résiduelle totale ≤ 2 % en poids, en se basant sur le poids sec total de l'au moins un matériau comprenant du carbonate de calcium, de préférence ≤ 1,5 % en poids, plus préférablement ≤ 1,2 % en poids et de manière préférée entre toutes ≤ 0,8 % en poids.

4. Composition selon l'une quelconque des revendications 1 à 3, dans laquelle l'au moins un polymère greffé comprenant au moins un groupe anhydride succinique non substitué obtenu par greffage d'anhydride maléique sur un homo- ou copolymère comprenant des motifs butadiène et/ou des produits réactionnels sous forme de sels de celui-ci, et éventuellement des motifs styrène.

5. Composition selon l'une quelconque des revendications 1 à 4, dans laquelle l'au moins un polymère greffé est
a) un homopolymère de polybutadiène greffé comprenant au moins un groupe anhydride succinique obtenu par greffage d'anhydride maléique sur un homopolymère de polybutadiène et ayant :
i) un poids moléculaire moyen en nombre Mn mesuré par chromatographie par perméation de gel de 1 000 à 20 000 g/mol, de préférence de 1 400 à 15 000 g/mol, et plus préférablement de 2 000 à 10 000 g/mol, et/ou
ii) un nombre de groupes fonctionnels par chaîne compris dans la plage allant de 2 à 12, de préférence de 2 à 9, et plus préférablement de 2 à 6, et/ou
iii) un poids équivalent en anhydride compris dans la plage allant de 400 à 2 200, de préférence de 500 à 2 000, et plus préférablement de 550 à 1 800,
ou
b) un copolymère polybutadiène-styrène greffé comprenant au moins un groupe anhydride succinique obtenu par greffage d'anhydride maléique sur un copolymère polybutadiène-styrène et ayant une teneur en 1,2-vinyle de 20 à 80 % en moles, de préférence de 20 à 40 % en moles, en se basant sur le poids total du copolymère polybutadiène-styrène greffé.

6. Composition selon l'une quelconque des revendications 1 à 5, dans laquelle la composition comprend l'au moins un matériau comprenant du carbonate de calcium et l'au moins un polymère greffé et/ou des produits réactionnels sous forme de sels de celui-ci sous forme de mélange physique et/ou en ce que l'au moins un polymère greffé et/ou les produits réactionnels sous forme de sels de celui-ci sont présents sur la surface de l'au moins un matériau comprenant du carbonate de calcium sous forme de couche de traitement.

7. Mélange de polyester comprenant
a) une résine polyester, et
b) de 3 à 82 % en poids, en se basant sur le poids total du mélange, de la composition selon l'une quelconque des revendications 1 à 6,
dans lequel la composition est dispersée dans la résine polyester.

8. Mélange de polyester selon la revendication 7, dans lequel la résine de polyester est constituée d'une ou plusieurs résines polyester saturées choisies dans le groupe comprenant l'acide polylactique, un polymère à base d'acide polylactique, un polyester aliphatique tel que les polyhydroxyalcanoates, par ex. le polyhydroxybutyrate, le poly-3-hydroxybutyrate (P3HB), le polyhydroxyvalérate, un copolymère polyhydroxybutyrate-polyhydroxyvalérate, le poly(3-hydroxybutyrate-co-3-hydroxyvalérate) ; le téréphtalate de polyéthylène (PET), le téréphtalate de polybutylène (PBT), le polybutyrate-adipate-téréphtalate (PBAT), le polyglycolide, la poly(dioxanone) et des mélanges de ceux-ci, de préférence choisies dans le groupe comprenant l'acide polylactique, un polymère à base d'acide polylactique et des mélanges de ceux-ci.

9. Mélange de polyester selon les revendications 7 ou 8, dans lequel la résine polyester a
i) un poids moléculaire moyen en nombre Mn mesuré par chromatographie par perméation de gel de 5 000 à 200 000 g/mol, de préférence de 10 000 à 100 000 g/mol, et plus préférablement de 15 000 à 80 000 g/mol, et/ou
ii) une densité relative mesurée selon la norme ASTM D782 de 0,5 à 5, de préférence de 0,7 à 4, et plus préférablement de 1 à 3, et/ou
iii) une température de transition vitreuse Tg mesurée par calorimétrie différentielle à balayage (DSC) comprise dans la plage allant de 35 à 90 °C, de préférence de 40 à 70 °C, et plus préférablement de 45 à 70 °C.

10. Mélange de polyester selon l'une quelconque des revendications 7 à 9, dans lequel la résine polyester est constituée d'acide polylactique, de préférence d'acide polylactique ayant de 1 à 10 % en poids, plus préférablement de 4 à 6 % en poids d'isomères D, en se basant sur le poids total de l'acide polylactique.

11. Mélange de polyester selon l'une quelconque des revendications 7 à 10, dans lequel le mélange comprend en outre des additifs tels que des pigments colorants, des fibres, par ex. de la cellulose, des fibres de verre ou de bois, des colorants, des cires, des lubrifiants, des stabilisants oxydants et/ou UV, des antioxydants et d'autres charges, telles que le noir de carbone, le TiO₂, le mica, l'argile, la silice précipitée, le talc ou le kaolin calciné.

12. Produit en polyester formé à partir du mélange de polyester selon l'une quelconque des revendications 7 à 11.

13. Procédé de préparation d'un produit en polyester tel que défini dans la revendication 12, dans lequel le procédé comprend les étapes consistant à
a) fournir une résine polyester,
b) fournir de 3 à 82 % en poids, en se basant sur le poids total du produit en polyester, d'au moins un matériau comprenant du carbonate de calcium comme charge,
c) fournir de 0,1 à 8 % en poids, en se basant sur le poids total du matériau comprenant du carbonate de calcium, d'au moins un polymère greffé comprenant au moins un groupe anhydride succinique obtenu par greffage d'anhydride maléique sur un homo- ou copolymère comprenant des motifs butadiène et éventuellement des motifs styrène,
d) éventuellement fournir des additifs supplémentaires tels que des pigments colorants, des fibres, par ex. de la cellulose, des fibres de verre ou de bois, des colorants, des cires, des lubrifiants, des stabilisants oxydants et/ou UV, des antioxydants et d'autres charges, telles que le noir de carbone, le TiO₂, le mica, l'argile, la silice précipitée, le talc ou le kaolin calciné,
e) mettre en contact les composants de l'étape a), de l'étape b), de l'étape c) et éventuellement de l'étape d), dans n'importe quel ordre, et
f) former le mélange de l'étape e) afin d'obtenir un produit en polyester.

14. Procédé selon la revendication 13, dans lequel lors de l'étape de mise en contact e), tout d'abord l'au moins un matériau comprenant du carbonate de calcium de l'étape b) est mis en contact, sous agitation, dans une ou plusieurs étapes, avec l'au moins un polymère greffé de l'étape c) de sorte qu'une couche de traitement comprenant l'au moins un polymère greffé et/ou des produits réactionnels sous forme de sels de celui-ci est formée sur la surface dudit au moins un matériau comprenant du carbonate de calcium de l'étape b), et ensuite, ce matériau comprenant du carbonate de calcium traité par réaction en surface est mis en contact, sous agitation, dans une ou plusieurs étapes, avec la résine polyester de l'étape a).

15. Procédé selon la revendication 13, dans lequel l'étape de mise en contact e) est réalisée pendant l'étape de formation f), en ce que l'au moins un polymère greffé est mis en contact, sous agitation, avec la résine polyester de l'étape a) avant ou après, de préférence après, l'ajout de l'au moins un matériau comprenant du carbonate de calcium.

16. Utilisation d'au moins un polymère greffé comprenant au moins un groupe anhydride succinique obtenu par greffage d'anhydride maléique sur un homo- ou copolymère comprenant des motifs butadiène et éventuellement des motifs styrène lors de la préparation d'un produit en polyester formé à partir d'un mélange de polyester comprenant une résine polyester et au moins un matériau comprenant du carbonate de calcium comme charge, afin de diminuer l'indice de fluidité à chaud d'un tel produit en polyester d'au moins 5 %, de préférence 10 %, mesuré selon la norme DIN EN ISO 1133-1:2011, par comparaison au même produit en polyester formé à partir du même mélange de polyester comprenant la résine polyester et au moins un matériau comprenant du carbonate de calcium, mais sans l'au moins un polymère greffé comprenant au moins un groupe anhydride succinique obtenu par greffage d'anhydride maléique sur un homo- ou copolymère comprenant des motifs butadiène et éventuellement styrène.

17. Article formé à partir d'un produit en polyester selon la revendication 12, dans lequel l'article est choisi dans le groupe comprenant les produits d'hygiène, les produits médicaux et de soins de santé, les produits de filtration, les produits géotextiles, les produits agricoles et horticoles, les vêtements, les articles chaussants et les produits de bagagerie, les produits ménagers et industriels, les produits d'emballage, les produits de construction, les pièces automobiles, les bouteilles, les tasses, et analogues.
